(19) Europäisches Patentamt
European Patent Office
Office européen des brevets

(11) **EP 2 199 183 B1**

(12) **EUROPEAN PATENT SPECIFICATION**

(45) Date of publication and mention
of the grant of the patent:
**14.11.2012 Bulletin 2012/46**

(51) Int Cl.:
***B62D 1/16*** *(2006.01)*        ***B62D 5/04*** *(2006.01)*
***B62D 6/00*** *(2006.01)*

(21) Application number: **09179678.9**

(22) Date of filing: **17.12.2009**

(54) **Vehicle steering system and control method thereof**

Fahrzeuglenksystem und Steuerungsverfahren dafür

Système de direction de véhicule et son procédé de commande

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.12.2008 JP 2008322029**

(43) Date of publication of application:
**23.06.2010 Bulletin 2010/25**

(73) Proprietor: **JTEKT Corporation
Osaka-shi, Osaka 542-8502 (JP)**

(72) Inventors:
• **Ohnuma, Yutaka
  Toyota-shi Aichi 471-8571 (JP)**
• **Yamakawa, Tomonari
  Osaka-shi, Osaka 542-8502 (JP)**

(74) Representative: **TBK
  Bavariaring 4-6
  80336 München (DE)**

(56) References cited:
**JP-A- 3 227 772          JP-A- 2004 358 985
US-A1- 2001 027 895**

## Description

BACKGROUND OF THE INVENTION

1. Field of the Invention

The invention relates to a vehicle steering system having a steering force transmission device having a mechanism for transmitting rotation between two shafts while changing a rotational phase difference therebetween, and an assisting device for assisting turning of the steered wheels in accordance with the force generated by a drive source, and a control method thereof.

2. Description of the Related Art

In recent years, there has been progress in the development of a steering force transmission device having a rotation transmission mechanism for transmitting the rotation of one of a first shaft which is linked to one of a steering operation member operated by a driver and a turning device that turns steered wheels, and a second shaft which is linked to the other of these shafts, while changing the rotational phase difference which is the difference between the rotational phases of the first shaft and the rotational phase of the second shaft. One example of a steering force transmission device having this rotation transmission device is described in Japanese Patent Application Publication No. 3-227772 (JP-A-3-227772), which is explained below. On the other hand, there are also steering systems for a vehicle that have an assisting device which assists the turning of the steered wheels in accordance with the force generated by a drive source, as in the power steering systems disclosed in Japanese Patent Application Publication No. 8-175406 (JP-A-8-175406) or Japanese Patent Application Publication No. 2000-159134 (JP-A-2000-159134). The systems described in JP-A-8-175406 or JP-A-2000-159134 are configured in order to deal with the various problems which arise when there is backlash in the gear provided between a steering operation member and a turning device by control of an assisting device.

In the steering force transmission device described in JP-A-3-227772, the rotation transmission mechanism has a protruding portion provided on the other end of a first shaft and a guide passage provided on the other end of the second shaft. The two shafts are linked together by the protruding portion engaging with the guide passage in a state of being sandwiched between a pair of side wall faces which delimit the guide passage. The rotation of one of the two shafts is transmitted to the other shaft via the protruding portion and the side wall faces. The protruding portion can move along the guide passage. A clearance is formed between the protruding portion and the pair of side wall faces, in such a manner that the protruding portion moves smoothly in the guide passage. However, backlash occurs because of this clearance. Consequently, there is a risk that the protruding portion may rattle between the pair of side wall faces, thus giving rise to noise, vibration, and the like, when running. Moreover, when starting to switch the operation of the steering operation member, for instance, due to the presence of the clearance, the rotation of one of the two shafts is not transmitted to the other shaft until the protruding portion abuts against one of the pair of side wall faces. There is a risk that this may make the driver feel uncomfortable when operating the steering operation member.

Moreover, US 2001/0027895 A discloses the technical features of the preamble of independent claims 1 and 8, respectively.

SUMMARY OF THE INVENTION

From the foregoing, it is considered that the practicality of a steering system having a steering force transmission device would be improved by using control of an assisting device to deal with problems such as those described above which occur due to the presence of backlash in the rotation transmission mechanism of the steering force transmission device. The object of the invention is to provide a steering system for a vehicle having high practicality and a control method thereof.

This object is achieved by a steering system exhibiting the features characterised in independent claim 1, and by the corresponding method according to independent claim 8.

A steering system for a vehicle according to a one aspect of the invention includes: (i) a steering operation member (10) that is operated by a driver; (ii) a turning device (14) that turns steered wheels in accordance with operation of the steering operation member (10); (iii) a steering force transmission device that has a first shaft, a second shaft, and a rotation transmission mechanism, and that transmits a steering force applied to the steering operation member (10), to the turning device (14); (iv) an assisting device (82); and (v) a control device (180) that controls the assisting device (82). The first shaft is provided rotatably and a first end portion of the first shaft is linked to one of the steering operation member (10) and the turning device (14). The second shaft is provided rotatably in a state where the rotation axis of the first shaft and the rotation axis of the second shaft are parallel and shifted from each other by a predetermined distance, and a first end portion of the second shaft is linked to the other of the steering operation member (10) and the turning device (14). The rotation transmission mechanism is configured such that, due to the rotation of the one of the first shaft and the second shaft, the other of these shafts is caused to be rotated while changing a rotational phase difference that is a difference between respective rotational phases of the first shaft and the second shaft. Furthermore, the rotation transmission mechanism includes a protruding portion and a guide passage (114). The protruding portion is provided, on a second end portion of the first shaft, at a position distanced by a predetermined distance in a radial direction of the first shaft from the rotation axis of the first shaft. The guide passage (114) is provided on a second end portion of the second shaft so as to extend in parallel with a radial direction of the second shaft, engages the protruding portion with a clearance in a circumferential direction of the second shaft, and allows the protruding portion to move in a radial direction of the second shaft. The assisting device (82) is provided on a side closer to the steered wheels than the rotation transmission mechanism of the steering force transmission device and includes a drive source (80). Furthermore, the assisting device (82) generates an assisting force for assisting the turning of the steered wheels in accordance with a force generated by the driver source (80). The control device (180) executes: (A) an assistance control for controlling the assisting device (82) such that the assisting device (82) generates a force ($T_A$) corresponding to the steering force transmitted by the steering force transmission device, and (B) in place of the assistance control or in addition to the assistance control, a steered amount control for controlling the assisting device (82) such that the assisting device (82) generates a force ($T_D$, $T_R$) based on a steering amount of the steering operation member (10), when the steering amount is smaller than a predetermined steering amount.

The steering system for the vehicle described above is configured so as to be able to execute, instead of or in addition to the assistance control for controlling the assisting device so as to generate the assisting force corresponding to the steering force transmitted by the steering force transmission device, the steered amount control for controlling the assisting device so as to generate the force based on the steering amount of the steering operation member if the steering amount is smaller than the predetermined steering amount.

In the steering system for the vehicle described above, the steered amount control is executed in cases where the steering operation member is operated in the vicinity of the neutral steering position. By this control, it is possible to generate the force for turning the steered wheels, or to generate the force in a direction which returns the steering operation member to the neutral steering position. Therefore, according to the steering system for the vehicle described above, when operating the steering operation member in the vicinity of the neutral steering position during running of the vehicle, it is possible to suppress deterioration in the operational feel caused by the presence of a clearance between the protruding portion and the guide passage. By having advantages of this kind, the steering system for a vehicle has excellent practicality. Furthermore, the invention also relates to a control method which is executed in the steering system for the vehicle described above.

BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

FIG. 1 is a schematic diagram showing a steering system for a vehicle according to a first embodiment of the invention;

FIG. 2 is a cross-sectional drawing showing a steering column of the steering system for a vehicle shown in FIG. 1;

FIG. 3 is a cross-sectional drawing showing an electric power steering (EPS) section of a steering column;

FIG 4 is a cross-sectional drawing along line IV - IV' in FIG. 3;

FIG 5 is a schematic diagram showing a rear bracket that holds a column section of a steering column;

FIG. 6A is a cross-sectional drawing along line IV - IV' in FIG 3 when the steering wheel is in a neutral steering position;

FIG. 6B is a cross-sectional drawing along line IV - IV' in FIG 3 when the steering wheel has been turned through 90° to the left from a neutral steering position;

FIG. 6C is a cross-sectional drawing along line IV - IV' in FIG 3 when the steering wheel has been turned through 90° to the right from a neutral steering position;

FIG. 6D is a cross-sectional drawing along line IV - IV' in FIG. 3 when the steering wheel has been turned through 180° to the left or right from a neutral steering position;

FIG. 7 is a graph showing the relationship between the rotation angle of a lower shaft and the rotation angle of an input side shaft;

FIG. 8 is a graph showing the gear ratio between a lower shaft and an input side shaft, which changes in accordance with the rotation angle of the lower shaft;

FIG 9 is a graph showing the relationship between the steering torque and the assisting torque component which is a component that is to be generated by the assisting device in assistance control;

FIG. 10 is a graph showing the relationship between a target motor rotation angle corresponding to a target steered amount and the steering angle, in steered amount control;

FIG. 11 is a graph showing the relationship between the rotation angle of the lower shaft and the rotation angle of the input side shaft in the vicinity of the neutral steering position, in a system according to a first embodiment in which steered amount control is executed and in a conventional system in which steered amount control is not executed;

FIG. 12 is a graph showing the relationship between the steering torque and a coefficient for correcting the steered torque component which is a component of the force to be generated by the assisting device in steered amount control, in accordance with the steering torque;

FIG. 13 is a flowchart representing a control program of an assisting device, which is executed by the steering electronic control unit (ECU) shown in FIG 1;

FIG. 14A is a graph showing the relationship of the returning force with respect to the steering angle in the vicinity of the neutral steering position, in a system according to a second embodiment in which steered amount control is executed and in a conventional system in which steered amount control is not executed;

FIG. 14B is diagram showing a map relating to the operating angle and the returning torque component according to the second embodiment; and

FIG. 15 is a flowchart representing a control program of an assisting device, which is executed by the steering ECU of a steering system for a vehicle according to the second embodiment.

DETAILED DESCRIPTION OF EMBODIMENTS

Firstly, an overview of the steering system according to an embodiment of the invention will be described. The steering system according to the embodiments of the invention is premised on having a steering force transmission device of a structure whereby the steering gear ratio, which is the ratio between the amount of change in the steering amount of the steering operation member and the amount of change in the steered amount of the steered wheels, is changed mechanically in accordance with the steering amount of the steering operation member. The rotation transmission mechanism of the steering force transmission device changes the difference between the rotation angle of the first shaft and the rotation angle of the second shaft. Here, the rotation angle of the second shaft, which is linked to the steering operation member, from among the two shafts, in a state where there is no difference in the rotation.angle between the two shafts (rotational phase difference) is defined as a reference rotation angle, and the rotation transmission mechanism is described more specifically. For example, if the second shaft is rotated from the reference rotation angle, then until the second shaft has rotated through 180°, the rotation angle of the first shaft, which is linked to the turning device, from among the two shafts is smaller than the rotation angle of the second shaft. Alternatively, the rotation angle of the first shaft becomes greater than the rotation angle of the second shaft. If the second shaft is rotated through 180°, then the first shaft also rotates through 180°, and the difference in the rotation angle between the two shafts disappears.

In other words, as the second shaft rotates to 180° from the reference rotation angle, the difference in the rotation angle increases from zero and then decreases from an intermediate point until reaching zero. In this case, the steering gear ratio, which is the ratio of the rotation speed of the first shaft with respect to the rotation speed of the second shaft becomes greater or smaller as the second shaft rotates to 180° from the reference rotation angle. Therefore, for example, if the gear ratio is made to increase as the second shaft rotates, and the reference rotation angle is the rotation angle of the second shaft in a state where the steering operation member is in a neutral steering position, then if the steering amount of the steering operation member is small, it is possible to achieve smooth and stable handling and furthermore, it is also possible to achieve handling with good response as the steering amount of the steering operation member increases.

Consequently, in a vehicle mounted with a steering force transmission device according to the embodiment of the invention, it is possible to change the operational feel of the steering operation member in the manner described above, without installing a steering system which changes the steering gear ratio in accordance with an actuator, such as an electromagnetic motor, in other words, a variable steering / steered ratio steering system (Variable Gear Ratio Steering (VGRS) system), or the like. Incidentally, the linking of the first end of the first shaft and the turning device or the linking of the first end of the second shaft and the steering operation member may be made by a direct coupling of the respective members, or a coupling via an intermediate shaft (hereinafter, abbreviated as "I/M shaft"), universal joint, or the like, between the members.

In the rotation transmission mechanism of the steering force transmission device described above, a clearance (gap) is provided between the protruding portion and the guide passage, so as to allow smooth movement of the protruding portion in the guide passage. However, due to the presence of backlash caused by this clearance, there is a risk that noise, vibration, or the like, may occur when the protruding portion makes contact with a portion of the guide passage. Moreover, at the start of a turning operation of the steering operation member, or in other such instances, the protruding portion and the guide passage do not make contact due to the existence of this clearance, and therefore a state occurs where the rotation of one of the two shafts is not transmitted to the other of the two shafts. In other words, there is a risk that the driver may feel uncomfortable when operating the steering operation member, due to the presence of play in the steering operation.

During normal vehicle running, there is input, for instance, such as the self-aligning torque, from the steered wheel side. Therefore, a force acts on the first shaft in a direction returning to the neutral position until the shaft returns to the vicinity of a neutral position which corresponds to the neutral steered position of the steered wheels. In other words, during running, a state where there is a clearance between the protruding portion and the guide passage often occurs when the two shafts are in the vicinity of a neutral position which corresponds to the neutral steering position and the neutral steered position. Furthermore, when turning back the steering wheel while the car is stationary, or when maneuvering in order to avoid an accident, or the like, there may be cases where a clearance exists between the protruding portion and the guide passage. However, it is considered that there is a particular risk of the driver feeling uncomfortable when the steering wheel is being operated in the vicinity of the neutral steering position during normal running of the vehicle.

The steering system for the vehicle according to the embodiment is configured in such a manner that the "steered amount control" described above is carried out in cases where the second shaft is in a position corresponding to the vicinity of the neutral steering position. Normally, this steered amount control is a control whereby an assisting device, which is controlled in order to generate a force assisting the turning of the steered wheels, generates a determined force on the basis of the steering amount of the steering operation member. The direction of the force generated by this steered amount control may be the same as the direction of rotation when the steering operation member is operated, or the opposite of this direction. Incidentally, the steering amount means the amount of operation from the neutral steering position.

If a force acting in the same direction as the direction of rotation of the steering operation member is generated by the steered amount control when the steering operation member is operated from the neutral steering position, as in the former case, then it is possible to turn and steer the steered wheels in accordance with the operation of the steering operation member, even in a state where the protruding portion is not in contact with a portion of the guide passage in the rotation transmission mechanism, in other words, even in a state where the steering force is not transmitted. Consequently, in this case, it is possible to suppress deterioration of the operational feel due to the fact that the steered wheels are not steered in accordance with the operation of the steering operation member.

Furthermore, if a force acting in the opposite direction to the direction of rotation of the steering operation member is generated by the steered amount control when the steering operation member is operated from the neutral steering position, as in the latter case, then the first shaft is caused to rotate in an opposite direction to the direction in which the second shaft is rotated by the steering operation. In other words, it is possible to cause the protruding portion and a portion of the guide passage to make contact rapidly, from a state where a clearance exists between the protruding portion and the guide passage. In other words, it is possible readily to change from a state where the steering force is not transmitted to a state where the steering force is transmitted. The force acting in the direction opposite to the direction of rotation of the steering operation member becomes a reactive force against the steering operation after the protruding portion has come into contact with a portion of the guide passage. Therefore, in this case, it is possible to suppress deterioration of the operational feel caused by the absence of a reactive force to the operation of the steering operation member.

In other words, when operating the steering operation member in the vicinity of the neutral steering position during running of the vehicle, it is possible to suppress deterioration in the operational feel caused by the presence of a clearance between the protruding portion and the guide portion.

In the steering system for the vehicle according to the embodiment, the first shaft which is linked to the turning device may be a hollow shaft which is formed to have a space extending in the rotation axis of the first shaft. The first shaft may be constituted by a shaft main body portion having two portions that can relatively rotate, and a torsion bar which is twisted by the steering force transmitted by the steering force transmission device. The torsion bar may be disposed in the space formed in the shaft main body portion. Each end portion of the torsion bar may be rotatably held respectively on the two portions of the shaft main body portion. The control device may estimate the steering force transmitted by the steering force transmission device on the basis of the amount of twisting of the torsion bar and control the assisting device in such a manner that the assisting device generates a force having a magnitude corresponding to the estimated steering force.

In a steering system having an assisting device, in other words, a so-called power steering system, a sensor that deteccts the steering force applied to the steering operation member is provided in order to determine the magnitude of the assisting force that is to be generated by the assisting device. This sensor may be one which estimates the steering force on the basis of the amount of torsion of the torsion bar. The steering system for the vehicle described above is an example of a structure that the first shaft is required in order to detect the steering force.

In the steering system for the vehicle according to the embodiment, the second shaft may include a pair of side wall faces, and this pair of side wall faces may be provided so as to face each other and so as to extend in parallel with the direction in which movement of the protruding portion is allowed. Furthermore, the width between the pair of side wall faces may be greater than the dimension of the protruding portion in the circumference direction of the first shaft. The rotation transmission mechanism may be configured in such a manner that the pair of side wall faces delimit the guide passage, and may also be configured in such a manner that the protruding portion is sandwiched by this pair of side wall faces.

As a result, it is possible to guide the protruding portion reliably in the radial direction of the shaft in accordance with the rotation of the second shaft. However, since a clearance is provided between the protruding portion and the pair of side wall faces, so as to ensure the smooth movement of the protruding portion, steered amount control is particularly effective in a steering system which has the present steering force transmission device.

In the steering system for the vehicle according to the embodiment, the predetermined steering amount may be set to an steering amount which is greater than the steering amount of the steering operation member when the protruding portion and one of the pair of side wall faces are mutually abutting, in a state where the turning device is in the neutral steered position.

By this means, steered amount control is executed at least within a range where the steering force is not transmitted in a conventional system in which steered amount control is not executed.

In the steering system for the vehicle according to the embodiment, the control device may determine a target steered amount for the steered wheels on the basis of the steering amount of the steering operation member, determine the force to be generated by the assisting device in such a manner that a steered amount of the steered wheels becomes the target steered amount, and control the assisting device so as to generate a determined force.

In more concrete terms, the steering system for the vehicle described above is an example in which a steered force is generated by the assisting device and the steered wheels are steered actively by this steered force, in a state where there is play in the steering member, in other words, in a state where the steering force input to the steering operation member is not being transmitted. In other words, in a state where the steering force input to the steering operation member is not being transmitted, for example, the steered wheels can be steered by control similar to that of a so-called steer-by-wire type steering system. Essentially, the steering system for the vehicle described above causes a force acting in the same direction as the direction of rotation of the steering operation member to be generated in steered amount control, when the steering operation member is operated from a neutral steering position. According to the steering system for the vehicle described above, it is possible to avoid a state where the steered wheels are not steered at all even if a steering operation is performed, and hence deterioration in the operational feel of the vehicle can be suppressed.

Furthermore, in the steering system for the vehicle described above, the target steered amount may be determined so as to become greater in accordance with the steering amount of the steering operation member.

In general, it is desirable that the steered amount should also become greater in accordance with the steering amount. The steering system for the vehicle described above is able to achieve a suitable steered amount in accordance with the steering amount, in a case where steered amount control as described above is executed.

Furthermore, in the steering system for the vehicle described above, the assisting device may be configured such that the control amount of the drive source is an amount corresponding to the steered amount, and when the steered amount control is executed, the actual steered amount is estimated on the basis of the control amount of the drive source of the assisting device, the force generated by the assisting device is determined on the basis of the estimated actual steered amount and the target steered amount, and the assisting device is controlled so as to generate the determined force.

In other words, the steered amount control is feedback control. In the steering system for the vehicle described above, since the first shaft is rotated in the same direction in accordance with the rotation of the second shaft, then the amount of decrease in the clearance between the protruding portion and the guide passage with respect to increase in the steering amount is small, as compared to a case where steered amount control is not executed. In other words, it is possible to alleviate the shock occurring when the protruding portion contacts a portion of the guide passage, and hence the noise, vibration, and the like, occurring in this instance can be reduced in comparison with a case where steered amount control is not executed. Incidentally, a steering system may has a sensor that detects the control amount of the drive source of the assisting device in order to control the drive source. The steering system for the vehicle according to the embodiment is particularly valuable in the case of a system of this kind, since there is no need to provide a sensor, or the like, unnecessarily.

In the steering system for the vehicle described above, when executing the steered amount control, the control device may determine the force to be generated by the assisting device on the basis of the steering amount of the steering operation member so as to obtain a returning force that corresponds to the steering amount of the steering operation member and that returns the steering operation member to the neutral steering position thereof, and the control device may control the assisting device so as to generate a determined force.

In the steering system for the vehicle described above, the assisting device generates a force which is a returning force, in other words, when the steering operation member has been operated from the neutral steering position, the assisting device generates a force in the direction opposite to the direction of rotation of the steering operation member by steered amount control. Consequently, it is possible to make the protruding portion change rapidly from a state where there is clearance between the protruding portion and the guide passage, to a state where the protruding portion contacts a portion of the guide passage. In other words, it is possible to apply a reactive force against the steering operation, even if the steering operation member is located in a position where a clearance occurs between the protruding portion and the guide passage. Consequently, it is possible to suppress deterioration in the operational feel experienced by the driver due to the absence of a reactive force against the steering operation.

The steered amount control described above may be feed-forward control or may be feedback control. To describe the latter case in detail, for example, the returning force actually acting on the steering operation member may be estimated on the basis of the steering force transmitted by the steering force transmission device, and the force generated by the assisting device may be determined in such a manner that this actual returning force becomes a target returning force set in accordance with the steering amount.

In the steering system for the vehicle described above, the force may be determined so as to gradually increase and then gradually decrease, as the steering amount of the steering operation member described above becomes greater, and the assisting device may be controlled so as to generate the determined force.

According to the steering system for the vehicle described above, it is possible to prevent sudden change in the force generated by the assisting device. More specifically, the steering system for the vehicle described above is an example where the steered amount control which generates a returning force is feed-forward control.

In the steering system for the vehicle described above, the control device may prohibits an execution of the steered amount control, when the steering force transmitted by the steering force transmission device exceeds a predetermined value.

The steering system for the vehicle described above is an example in which a prohibition condition is set for the steered amount control. In a state where the steering force transmission device transmits steering force to the turning device, the assisting device generates an assisting force on the basis of the assistance control. In other words, when the steering force transmission device is in a state of transmitting steering force to the turning device, then the execution of the steered amount control is prohibited. As a result, it is possible to prevent the steered amount control from obstructing assistance control.

In the steering system for the vehicle described above, the force generated by the assisting device may be determined so as to gradually decrease, as the steering force approaches the predetermined value, and the assisting device may be controlled so as to generate the determined force.

The steering system for the vehicle described above is an example in which the force generated by the assisting device gradually decreases as the steering force gradually becomes larger. In other words, the steering control is transferred gradually from the steered amount control to the assistance control. Consequently, when the execution of the steered amount control is prohibited, it is possible to prevent sudden change in the force generated by the assisting device.

In the foregoing general description of a steering system according to an embodiment of the invention and in the detailed description described below, for the sake of convenience, an embodiment is described in which the second shaft is linked to the steering operation member and the first shaft is linked to the turning device, but the invention is not limited to this. More specifically, it is also possible to link the first shaft to the steering operation member and to link the second shaft to the turning device.

Below, several embodiments of the invention are described in detail while referring to the diagrams. Apart from the embodiments described below, the invention can be implemented in a variety of modes which provide various modifications and improvements on the basis of the knowledge of a person skilled in the art.

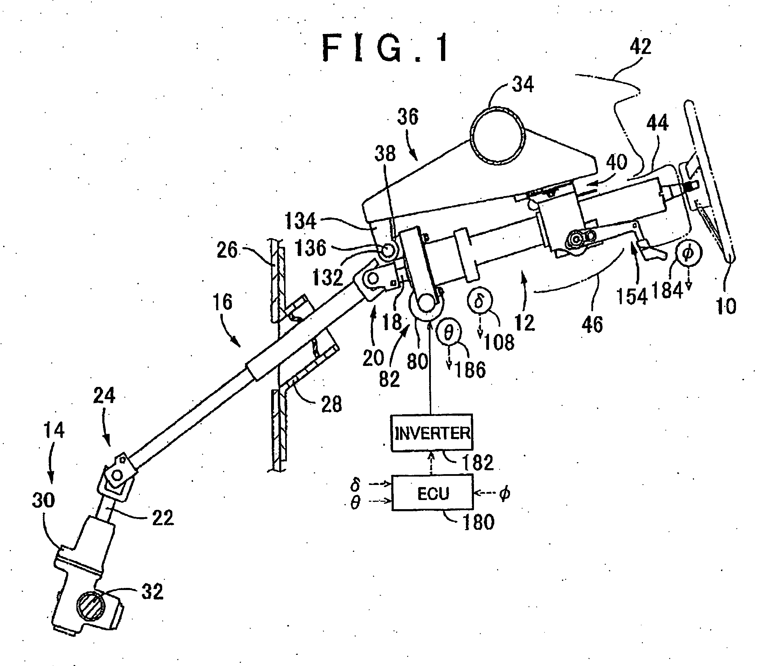

Firstly, FIG. 1 shows the general structure of a steering system for a vehicle according to a first embodiment. The steering system is constituted by a steering wheel 10 which is a steering operation member that is operated by a driver, a steering column 12 which holds the steering wheel 10 in a rear end portion thereof; a turning device 14 which steers and turns steered wheels; and an I/M shaft 16 which is disposed between the steering column 12 and the turning device 14. Moreover, the rear end portion of the I/M shaft 16 and the output shaft 18 of the steering column 12 are linked by a universal joint 20. The front end portion of the I/M shaft 16 and the rear end portion of the input shaft 22 of the turning device 14 are linked by another universal joint 24.

In FIG. 1, the right-hand side of the system, in other words, the steering wheel side 10, is disposed on the rear side of the vehicle. Furthermore, the right-hand side of the system, in other words, the turning device 14 side, is disposed on the front side of the vehicle. The I/M shaft 16 is disposed so as to pass through a hole formed in the dash panel 26 which separates the vehicle interior and the engine compartment. The circumference of the portion of the I/M shaft 16 inside the hole is covered with a boot 28.

The turning device 14 has an input shaft 22, a housing 30 forming an exterior member, and a steered rod 32 for turning the steered wheels. The steered rod 32 is held by the housing 30 movably in the axial direction thereof, and is disposed so as to extend in the width direction of the vehicle. Both ends of the steered rod 32 are linked to steering knuckles (not illustrated) which respectively hold left and right front steered wheels. Moreover, the input shaft 22 is held rotatably in the housing 30 and engages with a steered rod 32 inside the housing 30. A pinion (not illustrated) is formed on the front end of the input shaft 22. The steered rod 32 and the input shaft 22 engage with each other by a rack (not illustrated), which is formed in the intermediate portion of the steered rod 32 in the axial direction, engaging with the pinion.

The steering column 12 is secured and supported to a part of the vehicle body at a steering support 36 which is provided in an instrument panel reinforcement 34. As shown in the drawings, when in a supported state, the steering column 12 is disposed in an inclined attitude in which the front side of the steering column 12 is in a lower position. A front bracket 38 is provided in a front portion of the steering column 12. A detachable rear bracket 40 is provided on the rear side behind the front bracket 38. By attaching this front bracket 38 and rear bracket 40 respectively to the steering support 36, the steering column 12 is supported at two locations. The portion located on the rear side of the supported steering column 12 protrudes towards the rear from the instrument panel 42. The steering wheel 10 is installed on the rear end portion of the steering column 12 which projects from the instrument panel 42. The portion of the steering column 12 which protrudes from the instrument panel 42 is covered by the column cover 44. Furthermore, the lower portion of the steering column 12 is covered by an instrument panel lower cover 46.

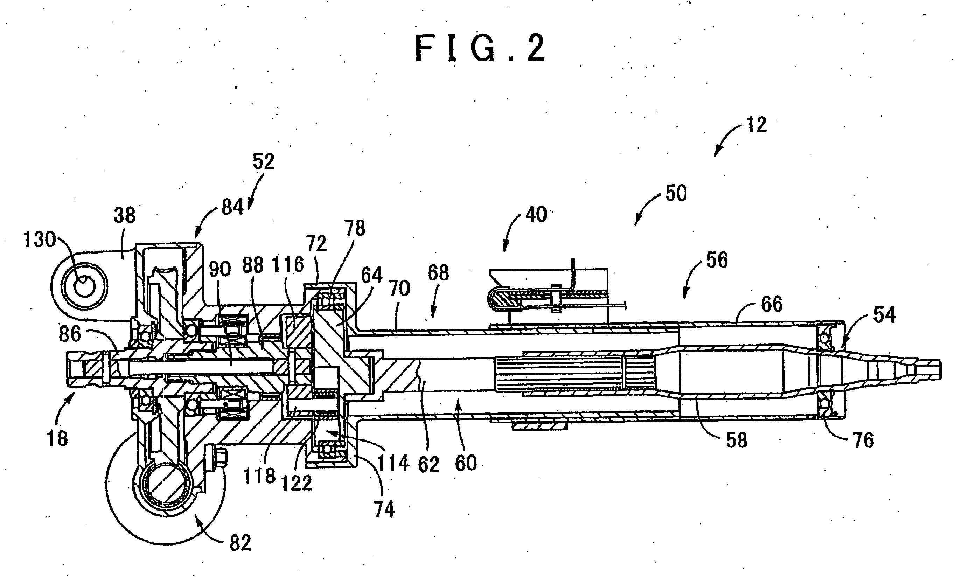

FIG. 2 is a cross-sectional side view of the steering column 12. The steering column 12 includes a column section 50 and an EPS section 52. The steering column 12 is formed by integrating these two sections 50, 52 into a single body. The column section 50 holds the steering wheel 10 and is extendable and shortenable in the axial direction. The EPS section 52 is a main unit which executes an EPS function. The respective sections are described in order below.

The column section 50 has a main shaft 54 and a column tube 56. The steering wheel 10 is held at the rear end portion of the main shaft 54. The column tube 56 is a housing which holds the main shaft 54 rotatably in a state where the main shaft 54 is passed through the column tube 56. The main shaft 54 is constituted by an upper shaft 58 which is disposed on the rear side, in other words, the upper side, and a lower shaft 60 which is disposed on the front side, in other words, the lower side. The upper shaft 58 is formed in a pipe shape, and the lower shaft 60 is formed in a rod shape. The rear portion of the lower shaft 60 is inserted into the front portion of the upper shaft 58. The upper shaft 58 and the lower shaft 60 are spline-interfitted. The upper shaft 58 and the lower shaft 60 are connected in a state which allows relative movement in the direction of the rotation axis and does not allow relative rotation. In other words, the main shaft 54 has a structure which can be lengthened and shortened in the direction of the rotation axis. The lower shaft 60 is constituted by a shaft main body portion 62 on the rear side thereof, and a circular flange portion 64. The outer diameter of the circular flange portion 64 is greater than the outer diameter of the shaft main body portion 62. In the circular flange portion 64, the column section 50 is linked to EPS section 52, which is described hereinafter. In the steering column 12, the shaft main body portion of the main shaft 54 is constituted by the shaft main body portion 62 of the lower shaft 60 and the upper shaft 58.

The column tube 56 is constituted by an upper tube 66 positioned on the rear side (upper side), and a lower tube 68 positioned on the front side (lower side). The upper tube 66 and the lower tube 68 both have a tube shape. The rear portion of the lower tube 68 as a second tubular member is inserted into the front portion of the upper tube 66 as a first tubular member. The lower tube 68 has a step shape. In other words, the lower tube 68 has a small diameter portion 70, a large diameter portion 72, and a step section 74 which connects the small diameter portion 70 and the large diameter portion 72. The small diameter portion 70 is located on the rear portion of the lower tube 68. Moreover, the outer diameter of the small diameter portion 70 is smaller than the inner diameter of the upper tube 66. The large diameter portion 72 is located in the front portion of the lower tube 68. Moreover, the outer diameter of the large diameter portion 72 is greater than the inner diameter of the upper tube 66. A liner, which is not illustrated, is provided between the small diameter portion 70 of the lower tube 68 and the upper tube 66. By interposing this liner, the lower tube 68 is inserted, without rattling, into the upper tube 66, and relative movement between the upper tube 66 and lower tube 68 in the direction of the rotation axes is made easier. In other words, the column tube 56 has a structure which can be lengthened and shortened in the direction of the rotation axis.

Furthermore, a radial bearing 76 is provided on the rear end portion of the upper tube 66. A radial bearing 78 is provided via a portion of the EPS section 52 (described hereinafter) on the large diameter portion 72 of the lower tube 68. The main shaft 54 is held rotatably by these bearings 76 and 78. In this structure, the column section 50 is made extendable and shortenable, while ensuring the rotation of the main shaft 54.

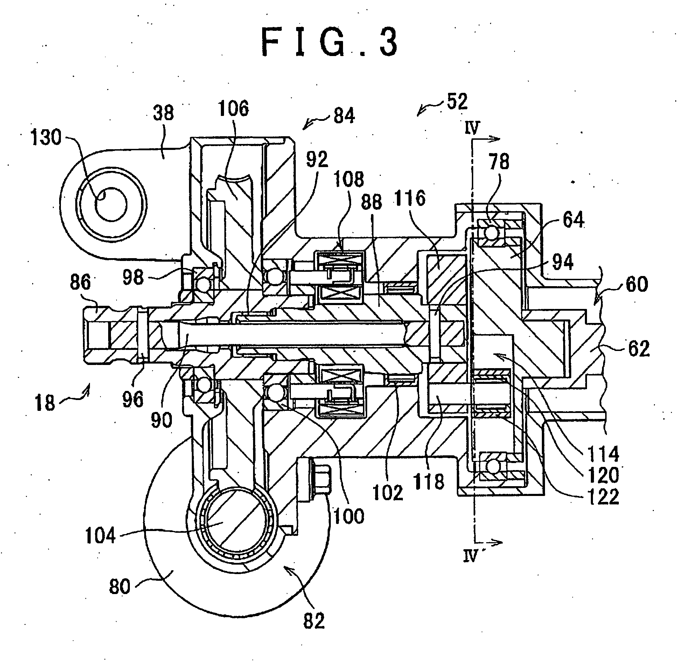

FIG. 3 is a cross-sectional side view of the EPS section 52. The EPS section 52 includes an output shaft 18, an assisting device 82 including an electromagnetic motor 80 as a power source, and an EPS housing 84. The output shaft 18 outputs steering force which is applied to the steering wheel 10, to the turning device 14. The assisting device 82 assists the rotational output of the output shaft 18 by the motor 80. The EPS housing 84 rotatably holds the output shaft 18 and also accommodates the assisting device 82. The output shaft 18 is constituted by a shaft formed by integrating three members: an output side shaft 86, an input side shaft 88, and a torsion bar 90. The output side shaft 86 extends from the front side of the EPS housing 84. The extending portion of the output side shaft 86 is connected via an universal joint 20 to the I/M shaft 16, and outputs rotation to the turning device 14.

The output side shaft 86 has a hollow structure. The input side shaft 88 is inserted into the rear portion of the output side shaft 86. A bearing 92 is interposed between the inner circumferential surface of the output side shaft 86 and the outer circumferential surface of the input side shaft 88. Accordingly, the output side shaft 86 is able to rotate relatively with respect to the input side shaft 88. The input side shaft 88 has a hole provided in the front end face thereof. The input side shaft 88 is formed with a hole extending in the rotation axis direction from the opening thereof. The rear end face of the input side shaft 88 is closed without the opening. The rear end.portion of the torsion bar 90 is secured by a pin 94 to the base of the hole. The front end of the torsion bar 90 is secured by a pin 96 to the front end portion of the output side shaft 86. The pin 96 is inserted into a through hole which passes in the radial direction of the output side shaft 86. In this structure, the output shaft 18 allows torsion of the torsion bar 90, and is itself twisted by a corresponding amount. Furthermore, the output side shaft 86 is held rotatably by the EPS housing 84 via two radial bearings 98 and 100, on the outer circumference face of the output side shaft 86. The input side shaft 88 is held rotatably by the EPS housing 84 via a needle bearing 102 on the outer circumference face of the input side shaft 88.

The assisting device 82 has the electromagnetic motor 80, a worm 104, and a worm wheel 106. The worm 104 is linked to the motor axis of the electromagnetic motor 80. The worm wheel 106 meshes with the worm 104. The worm wheel 106 is fixed to the output side shaft 86 of the output shaft 18 and is unrotatable relatively with respect to the output side shaft 86. Due to this structure, a rotational force is applied to the worm 104 by the electromagnetic motor 80 and a rotational force is applied to the worm wheel 106. In other words, the assisting device 82 has a structure in which the rotational output of the output shaft 18 is assisted by the electromagnetic motor 80, and an assisting force for assisting the turning of the steered wheels is generated.

Furthermore, the EPS section 52 also has a relative displacement amount sensor 108 for detecting the steering force (steering torque). In more detail, the relative displacement amount sensor 108 detects the magnitude of the force transmitted from the main shaft 54 to the output shaft 18. This relative displacement amount sensor 108 is provided between the output side shaft 86 and the input side shaft 88. The relative displacement amount sensor 108 detects the amount of relative rotational displacement between the output side shaft 86 and the input side shaft 88. It is possible to estimate the steering force on the basis of this amount of relative rotational displacement. The operation of the electromagnetic motor 80 is controlled so as to generate an assisting force which corresponds to the magnitude of the estimated steering force.

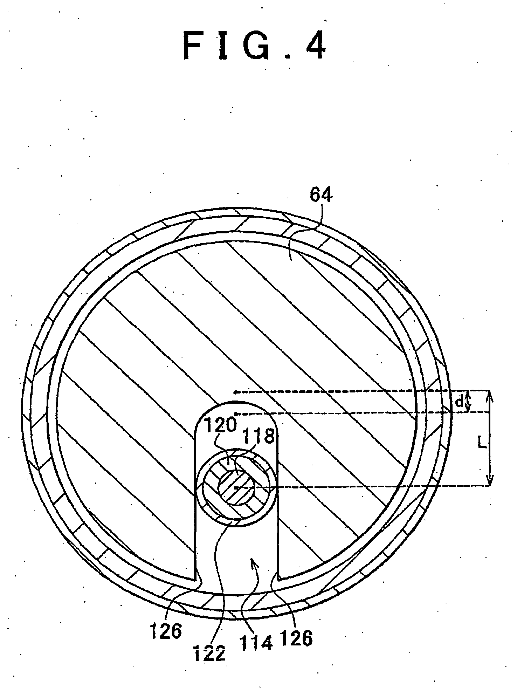

Moreover, the output shaft 18 is linked to the front end portion of the main shaft 54. The rotation axis of the output shaft 18 is parallel to the rotation axis of the main shaft 54. The output shaft 18 and the main shaft 54 are provided in such a manner that their respective rotation axes are shifted from each other by a predetermined amount. More specifically, firstly, a groove 114 extending in the radial direction of the circular flange portion 64 is formed on the front end face of the circular flange portion 64 of the lower shaft 60, as shown in FIG. 4 which is a cross-sectional view along line IV - IV' in FIG. 3. On the other hand, a ring plate 116 that has a circular ring shape is interfitted securely into the rear end portion of the input side shaft 88. The rear end face of the ring plate 116 and the front end face of the circular flange portion 64 of the lower shaft 60 face each other with a small gap. A pin 118 is fixed to the ring plate 116 in a state of protruding toward the rear side. A roller 122 that has round cylindrical shape is provided via a needle bearing 120 on the protruding portion of the pin 118. The outer diameter of the roller 122 is slightly smaller than the width of the groove 114. The input side shaft 88, that is, the output shaft 18, is linked to the lower shaft 60 of the main shaft 54, by the roller 122 engaging with the groove 114.

That is, in the steering column 12, a protruding section which protrudes in a direction extending in the rotation axis of the input shaft 88, from the ring plate 116, is formed by the pin 118, the needle bearing 120 and the roller 122. A first shaft which is a shaft linking to the turning device 14 side is constituted by this protruding section, the output shaft 18 and the ring plate 116. The shaft main body portion of the first shaft is constituted by an input side shaft 88 and an output side shaft 86. Incidentally, the main shaft 54 which is a shaft linking to the steering operation member side functions as a second shaft.

When the steering wheel 10 is turned and operated by the driver, the main shaft 54 rotates about its own rotation axis. In so doing, the roller 122 which is engaged with the groove 114 formed on the circular flange portion 64 of the lower shaft 60 is restricted from being displaced in the circumferential direction of the lower shaft 60 due to the pair of side wall faces 126 of the groove 114. Furthermore, the roller 122 is allowed to move in the radial direction of the lower shaft 60 by the groove 114. In other words, the groove 114 functions as a guide passage. When the roller 122 moves in the groove 114 due to the rotation of the lower shaft 60, the rotational force of the lower shaft 60 is transmitted to the input side shaft 88, via the roller 122, the pin 118, the ring plate 116, and the like. Consequently, this input side shaft 88 rotates about its own rotation axis. More specifically, the steering column 12 has a rotation transmission mechanism which transmits the rotation of the lower shaft 60 about the rotation axis, to the input side shaft 88 which is disposed with the rotation axis thereof shifted from the rotation axis of the lower shaft 60. This rotation transmission mechanism is constituted by the groove 114, the roller 122, the pin 118, the needle bearing 120, and the like. In the structure described above, the steering column 12 transmits the steering force input to the steering wheel 10, to the turning device 14, via the I/M shaft 16, and the like. That is, the steering column 12 and the I/M shaft 16 constitute a steering force transmission device which transmits the steering force of the steering wheel 10 to the turning device 14.

The steering column 12 is attached to a portion of the vehicle body at the front end portion of the EPS section 52 and the upper tube 66 of the column section 50. The front bracket 38 which was described previously is provided securely on the EPS housing 84 of the EPS section 52. An through hole 130 is provided on the front bracket 38. A shaft supporting member 134 having a hole 132 pierced therein is fixed to the steering support 36. The steering column 12 is supported in an oscillatable fashion about a support shaft 136 by passing the support shaft 136 through the through hole 130 in the front bracket 38 and the hole 132 of the shaft supporting member 134.

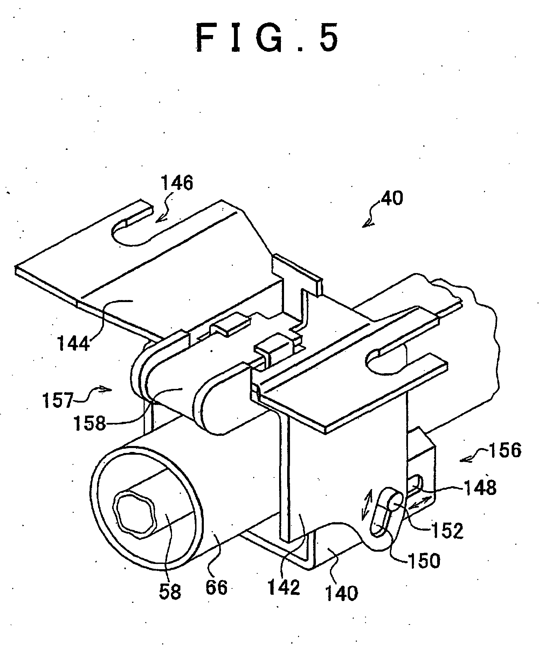

On the other hand, the column section 50 is held on the rear bracket 40 and this rear bracket 40 is installed on the steering support 36. To give a more detailed description, the rear bracket 40 has a holding member 142 and an attachment plate 144, as shown in FIG. 5. The holding member 142 holds a held member 140 which is fixed to the upper tube 66. The attachment plate 144 is fixed to the holding member 142 and is thereby attached to the steering support 36. The rear bracket 40 is fastened to the steering support 36 by using a slot 146 which is provided in the attachment plate 144. Long holes 148 and 150 are opened respectively in the held member 140 and the holding member 142. A rod 152 is passed through the long holes 148 and 150, and although not shown in the drawings, the holding member 142 sandwiches and holds the held member 140 with using this rod 152. This structure is achieved which prohibits the displacement of the upper tube 66 due to this holding force. Also, it is possible to weaken this holding force by operating the operating lever 154. In a state where the holding force has been weakened, the rod 152 can be moved along the long hole 148. Consequently, the upper tube 66 can be moved in the axial direction with respect to the lower tube 68, and furthermore the upper shaft 58 can be moved in the axial direction with respect to the lower shaft 60. Therefore, the column section 50 can be lengthened or shortened. Furthermore, by adopting a structure which allows movement of the rod 152 along the long hole 150, the steering column 12 can be oscillated about the support shaft 136 which is inserted into the front bracket 38. In other words, the steering column 12 has a tilting and telescopic mechanism 156 having the structure described above.

If a collision of the vehicle causes a secondary collision of the driver against the steering wheel 10, then the rear bracket 40 separates from the steering support 36 and the column section 50 is shortened. The steering column 12 is provided with a shock absorption mechanism 157 which absorbs the shock of a secondary collision, and the shock of the secondary collision is absorbed effectively by the shock absorption plate 158 being caused to deform due to the shortening of the steering column 56.

In the assisting device 82 described previously, the assisting force is controlled by an ECU 180, which is a steering ECU shown in FIG. 1. The ECU 180 is connected to an inverter 182 which is a drive circuit for the motor 80 of the assisting device 82, and controls the motor 80 by controlling this inverter 182. The inverter 182 is connected to a power supply (not illustrated), and electric power (electric current) is supplied to the motor 80 from this power supply. This electric current is supplied by the inverter 182 changing the ratio (duty ratio) between the pulse on time and the pulse off time by Pulse Width Modulation (PWM).

Furthermore, the ECU 180 is connected to various sensors, such as the relative displacement amount sensor 108, a steering angle sensor 184, a motor rotation angle sensor 186, and the like. The relative displacement amount sensor 108 detects a relative amount of displacement $\delta$ for estimating the steering torque which was described previously. The steering angle sensor 184 detects the steering angle $\phi$ with reference to the neutral steering position of the steering wheel 10, as a steering amount of the steering operation member. The motor rotation angle sensor 186 detects the rotation angle $\theta$ of the motor 80 of the assisting device 82. The ECU 180 controls the operation of the assisting device 82 on the basis of the signals from these sensors. Furthermore, a read only memory (ROM) provided in the computer of the ECU 180 stores a program and data of various types relating to the control of the assisting device 82.

In the steering column 12, the output shaft 18 which is one portion of the first shaft and the main shaft 54 which is one portion of the second shaft, the shafts being disposed with their axes in parallel and shifted from each other, are coupled together by the rotation transmission mechanism described above. In more concrete terms, the input side shaft 88 of the output shaft 18 and the lower shaft 60 of the main shaft 54 are coupled by the rotation transmission mechanism described above. As a result of this, the rotational phase of the lower shaft 60 and the rotational phase of the input side shaft 88 are shifted from each other, and there is variation in the rotational phase difference, which is the difference between the rotational phases of the two shafts 60 and 88. This is described more concretely below with reference to the drawings.

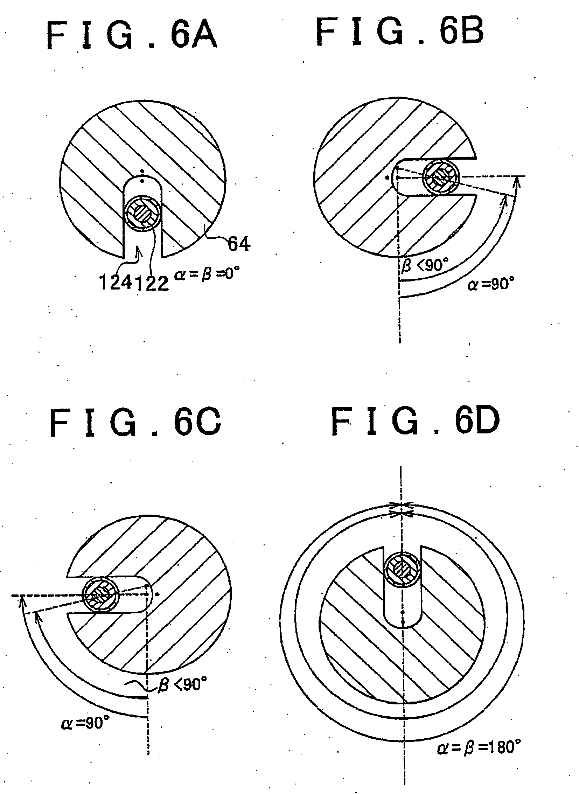

FIGS 6A to 6D show cross-sectional views (corresponding to the cross-sectional views along IV - IV' in FIG. 3) of the circular flange portion 64 of the lower shaft 60, the input side shaft 88 which is linked to the circular flange portion 64 and the roller 122 which is engaged with the groove 114 formed in the circular flange portion 64. FIG. 6A shows a state where the steering wheel 10 is in the neutral steering position and the steered wheels are situated in the neutral steered position. FIG. 6B shows a state where the steering wheel 10 is at a position where it has been turned through 90° to the left from the neutral steering position. FIG. 6C shows a state where the steering wheel 10 is at a position where it has been turned through 90° to the right from the neutral steering position. FIG. 6D shows a state where the steering wheel 10 is at a position turned through 180° to the right or left from the neutral steering position.

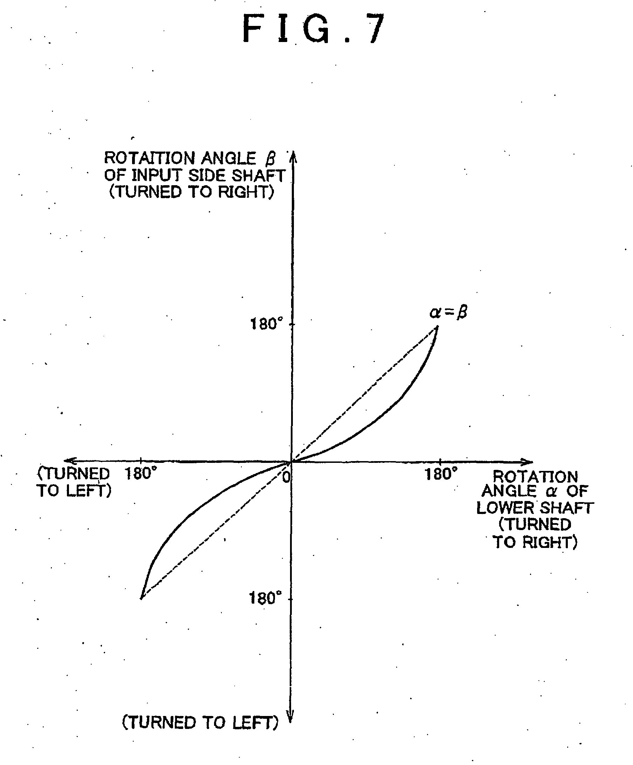

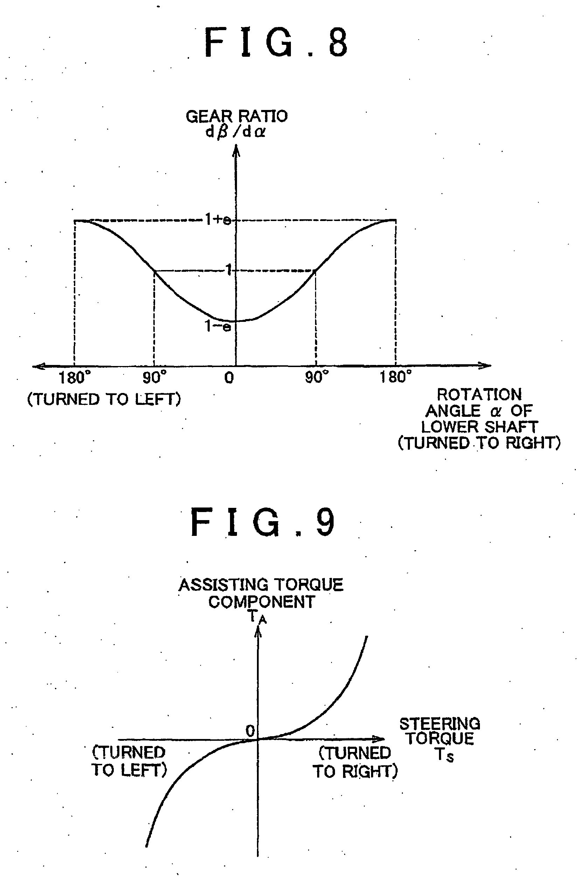

As FIGS. 6A to 6D show, if the steering wheel 10 is turned through 90° to the right or left from the neutral steering position, then the lower shaft 60 rotates through 90° around the rotational axis thereof. However, the input side shaft 88 does not rotate as far as 90° about the rotational axis thereof, and the rotation angle of the input side shaft 88 is less than 90°. If the steering wheel 10 is turned further and is turned through 180° to the left or right from the neutral steering position, then the lower shaft 60 and the input side shaft 88 are both rotated through 180°. The relationship between the rotation angle $\alpha$ of the lower shaft 60 and the rotation angle $\beta$ of the input side shaft 88 is such that, when the steering wheel 10 is turned through less than 180° from the neutral steering position as shown in FIG. 7, then the rotation angle $\beta$ of the input side shaft 88 is smaller than the rotation angle $\alpha$ of the lower shaft 60. If the steering wheel 10 is turned through 180° from the neutral steering position, then the rotation angle $\beta$ of the input side shaft 88 is the same as the rotation angle $\alpha$ of the lower shaft 60. In other words, if the rotational phase of the lower shaft 60 is a particular rotational phase where the rotational phase of the lower shaft 60 and the rotational phase of the input side shaft 88 are matching, in more concrete terms, if the rotation angle $\alpha$ of the lower shaft 60 is 0° or 180°, then the respective rotation angles $\alpha$ and $\beta$ become the same, and the rotational phase difference becomes zero. On the other hand, as the rotation angle $\alpha$ of the lower shaft 60 changes from 0° to 180°, the rotational phase difference gradually increases, and then from a certain rotation angle, conversely, gradually decreases and becomes zero. In this case, the gear ratio ($d\beta/d\alpha$) of the lower shaft 60 and the input side shaft 88, in other words, the ratio ($d\beta/d\alpha$) between the rotation speed of the input side shaft 88 ($d\beta/dt$) and the rotation speed ($d\alpha/dt$) of the lower shaft 60 changes depending on the rotation angle $\alpha$ of the lower shaft 60, as shown in FIG. 8. As described in more detail hereinafter, since there is a clearance between the roller 122 and the pair of side wall faces 126 which form the groove 114, then in practice, there is an angular difference corresponding to this clearance between the rotation angle $\alpha$ of the lower shaft 60 and the rotation angle $\beta$ of the input side shaft 88.

As FIG. 8 shows, when the rotation angle $\alpha$ of the lower shaft 60 is 0°, then the gear ratio ($d\beta/d\alpha$) is smallest, and as the rotation angle $\alpha$ of the lower shaft 60 becomes larger, so the gear ratio ($d\beta/d\alpha$) becomes larger. In other words, in the steering column 12, when the steering angle of the steering wheel 10 is small, gentle and stable handling is achieved. Thereupon, as the steering angle of the steering wheel 10 becomes greater, handling of good response is achieved. Incidentally, in the system, the turning device 14 has a steered range limiting mechanism which limits the range through which the steered wheels are steered, and by this steered range limiting mechanism, the steering range of the steering wheel 10 is limited to approximately 180° to the left and right from the neutral steering position.

The value e indicated on the vertical axis in FIG. 8 is the ratio of the amount of shift d (FIG. 4) between the rotation axis of the input side shaft 88 and the rotation axis of the lower shaft 60, with respect to the amount of offset L (FIG. 4) between the position where the roller 122 engages with the groove 114 and the rotation axis of the input side shaft 88.

In the steering system, the motor 80 of the assisting device 82 described above is controlled by the ECU 180. Normally, the ECU 180 executes assistance control to generate an assisting force for assisting the turning of the steered wheels. In this assistance control, firstly, the steering force applied to the steering wheel 10, and more specifically, the steering torque $T_S$ transmitted to the output shaft 18 via the rotation transmission mechanism of the steering force transmission device is estimated on the basis of the respective relative rotational displacement amounts $\delta$ of the ends of the torsion bar 90 as detected by the relative displacement amount sensor 108. The assisting torque component $T_A$, which is the target assisting force and is one component of the force generated by the assisting device 82, is determined on the basis of this estimated steering torque $T_S$. Map data of the assisting torque component $T_A$, which is based on the steering torque $T_S$ as a parameter, as shown in FIG. 9, is stored in the controller of the ECU 180. This map data is referenced when determining the assisting torque component $T_A$.

Furthermore, in addition to the assistance control described above, the ECU 180 executes steered amount control which causes the assisting device 82 to generate a force having a magnitude based on the steering angle $\phi$ of the steering wheel 10, if the main shaft 54 which is linked to the steering wheel 10 is within a set angle range which includes the rotation angle corresponding to the neutral steering position of the steering wheel 10. More specifically, this steered amount control is control which generates a steered force for actively turning the steered wheels so as to achieve a steered amount corresponding to the steering angle $\phi$.

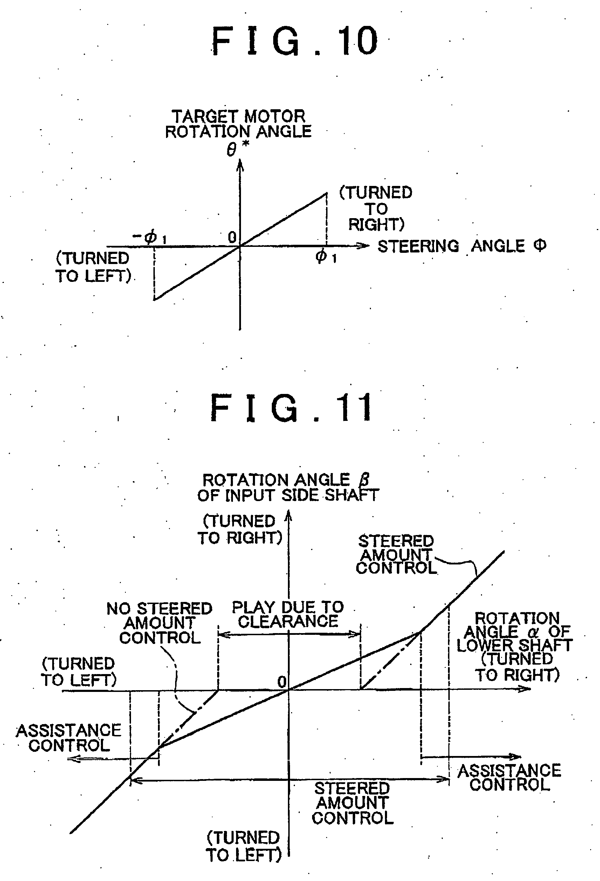

The steered amount control is executed when an absolute value of the steering angle $\phi$ detected by the steering angle sensor 184 is smaller than an absolute value of a set steering angle $\phi_1$. If the steering angle $\phi$ is smaller than the set value $\phi_1$, then the target steered amount of the steered wheels is determined on the basis of this steering angle $\phi$. The steered amount of the steered wheels corresponds to the rotation angle of the motor 80 of the assisting device 82. Consequently, in practice, a target motor rotation angle $\theta^*$ is determined in the steered amount control. Map data for the target motor rotation angle $\theta^*$ which is based on the steering angle $\phi$ as a parameter, as shown in FIG. 10, is stored in the controller of the ECU 180. This map data is referenced when determining the target motor rotation angle $\theta^*$. Thereupon, the actual motor rotation angle $\theta$ is received on the basis of the detection signal of the motor rotation angle sensor 186. The motor rotation angle difference $\Delta\theta$ (= $\theta^*$ - $\theta$) between the target motor rotation angle $\theta^*$ and the actual motor rotation angle $\theta$ is calculated. Thereupon, the steered torque component $T_D$, which is the target steered force and is one component of the force that the assisting device 82 is caused to generate, is determined in such a manner that the motor rotation angle difference $\Delta\theta$ becomes 0. More specifically, in this steered amount control, the steered torque component $T_D$ is determined by feedback control.

The steered torque component $T_D$ is determined in accordance with the proportional-integral-derivative (PID) control rule in Equation (1) below, on the basis of the motor rotation angle difference $\Delta\theta$.

$$T_D = K_p \times \Delta\theta + K_i \times \text{Int}(\Delta\theta) + K_d \times \Delta\theta' \cdots(1)$$

Here, Int ($\Delta\theta$) corresponds to the integrated value of the motor rotation angle difference $\Delta\theta$. Furthermore, the first, second and third terms respectively mean the proportional term component, the integral term component and the differential term component in the steered torque component $T_D$. $K_p$, $K_i$ and $K_d$ respectively mean the proportional gain, the integral gain and the differential gain.

The determination of the target output torque and the control of the assisting device 82 are carried out on the basis of the target output torque, which is the torque that the assisting device 82 should be caused to generate. More specifically, as stated above, when the assisting torque component $T_A$ of the force to be generated by the assisting device 82 and the steered torque component $T_D$ have been determined, then the target output torque T* is determined in accordance with Equation (2) below, on the basis of these components.

$$T^* = T_A + T_D \cdots(2)$$

The operation of the motor 80 for generating the target output torque T* determined in this way is controlled by the inverter 182. More specifically, the target current to be supplied to the motor 80 is determined by the following Equation (3), on the basis of the target output torque T* determined as described above.

$$I^* = K_T \times T^* \cdots(3)$$

Here, $K_T$ is the gain. The target duty ratio is determined on the basis of the target supply current i* and a command based on this duty ratio is transmitted to the inverter 182. The switching element of the inverter 182 is controlled so as to open and close, in accordance with this suitable duty ratio. Consequently, the motor 80 is operated so as to generate a target output torque T*. In other words, the force to be generated by the assisting device 82 is controlled by controlling the operation of the motor 80.

FIG. 11 shows the relationship between the rotation angle $\alpha$ of the lower shaft 60. and the rotation angle $\beta$ of the input side shaft 88, in a case where the lower shaft 60 and the input side shaft 88 are respectively located near to positions corresponding to the neutral steering position and the neutral steered position. FIG. 11 shows a case where the steering wheel 10 has been operated from the neutral steering position. The solid line indicates the relationship in the steering system in which steered amount control is executed. Moreover, the single-dotted line shows the relationship in a conventional steering system in which steered amount control is not executed.

In a conventional system, as also indicated by the single-dotted line in FIG. 11, since there is a clearance between the roller 122 and the pair of side wall faces 126 which form the groove 114, then the lower shaft 60 rotates and the input side shaft 88 does not rotate until one of the pair of side wall faces 126 abuts against the roller 122. On the other hand, in the system according to the embodiment, even in a state where rotation cannot be transmitted by the rotation transmission mechanism, the steered wheels are steered and turned in accordance with the operation of the steering wheel 10, by steered amount control. Therefore, according to the present steering system, it is possible to avoid a state where the steered wheels are not steered at all even if a steering operation is performed, as in a conventional system, and hence deterioration in the operational feel of the vehicle in the initial stage of a steering operation can be suppressed.

Furthermore, in this steering system, the input side shaft 88 is rotated in the same direction in accordance with the rotation of the lower shaft 60. Therefore, the amount of decrease in the clearance between the roller 122 and one of the pair of the side wall faces 126 in accordance with the increase in the steering angle is smaller than in a conventional system. More specifically, according to the steering system, it is possible to suppress the shock occurring when the roller 122 and one of the pair of side wall faces 126 abut against each other. Therefore, it is possible to reduce the noise, vibration, and the like, which occurs at the time of abutment, in comparison with a conventional system.

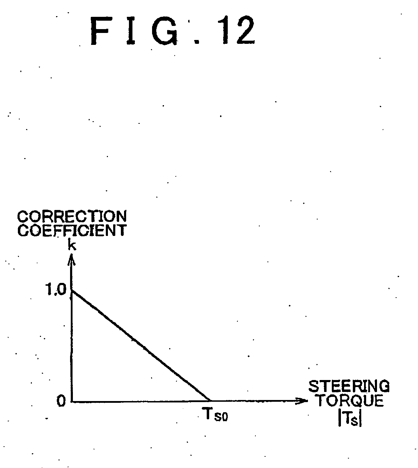

The steered amount control described above is prohibited from being executed in cases where the absolute value of the steering torque $T_S$ transmitted to the output shaft 18 by the rotation transmission mechanism exceeds the set value $T_{SO}$. If the steering torque $T_S$ estimated from the detected value of the relative displacement amount sensor 108 exceeds the set value $T_{SO}$, then it can be regarded that the system is already in a state where rotation can be transmitted by the rotation transmission mechanism, and the assisting torque component $T_A$ in the assistance control described above has become relatively large. Therefore, in the steering system, if the absolute value of the steering torque $T_S$ exceeds a set value $T_{SO}$, then the term relating to the steered torque component $T_D$ of Equation (2) for calculating the target output torque T* is taken to be zero, and execution of steered amount control is prohibited. More specifically, as shown in FIG. 12, the correction coefficient k is set so as to become smaller from 1.0 towards 0, as the absolute value of the steering torque $T_S$ increases toward the set value $T_{SO}$. The target output torque T* is determined by multiplying the correction coefficient k corresponding to the magnitude of the absolute value of the steering torque $T_S$ by the steered torque component $T_D$. By this means, in the steering system, the steering control is transferred gradually from steered amount control to assistance control. Therefore, if the steering angle $\phi$ becomes equal to or greater than the set value $\phi_1$ and the execution of steered amount control is prohibited, it is possible to prevent sudden change in the force generated by the assisting device 82.

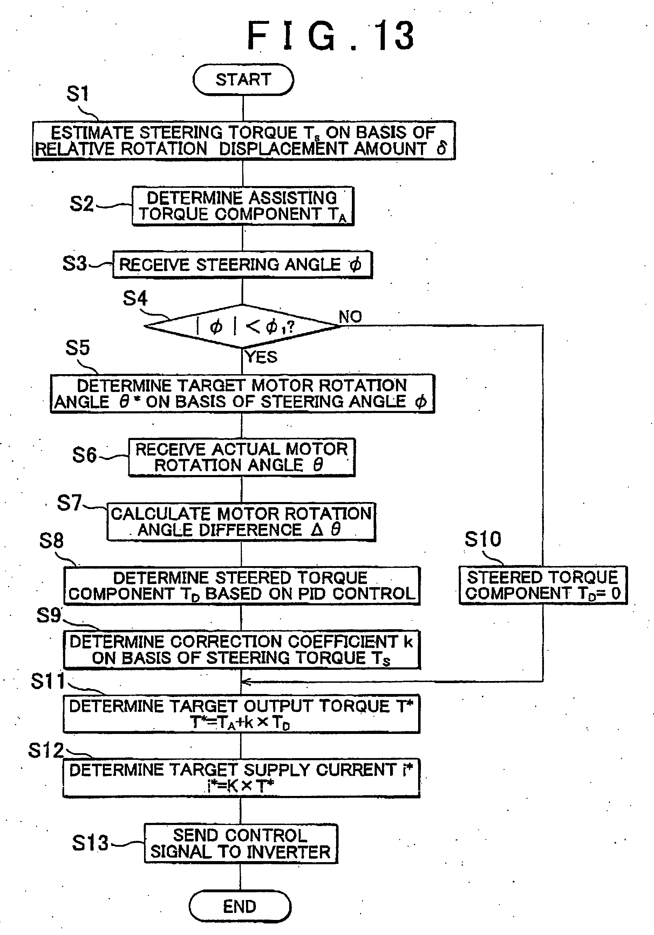

The flowchart in FIG. 13 illustrates the control of the assisting device 82 described above. This control program is executed repeatedly by the ECU 180, at short time intervals apart, while the ignition switch is in an ON state. Below, this control flow is described briefly while referring to the flowchart shown in FIG. 13.

In the processing based on the control program, firstly, in step 1 (abbreviated as "S1"; same applies to other steps), the steering torque $T_S$ is estimated on the basis of the relative rotational displacement amount $\delta$ between the output side shaft 86 and the input side shaft 88 detected by the relative displacement amount sensor 108. At S2, the assisting torque component $T_A$ is determined on the basis of the map data for the assisting torque component $T_A$ with respect to the steering torque $T_S$ shown in FIG. 9.

Next, at S3, the steering angle $\phi$ of the steering wheel 10 detected by the steering angle sensor 184 is received. At S4, it is determined whether or not to execute steered amount control, on the basis of this steering angle $\phi$. If the absolute value of the steering angle $\phi$ is smaller than the set value $\phi_1$, the steered amount control from S5 onwards is executed. More specifically, at S5, a target motor rotation angle $\theta$* is determined on the basis of the map data for the target motor rotation angle $\theta$* with respect to the steering angle $\phi$ shown in FIG. 10. Thereupon, in S6 to S8, the steered torque component $T_D$ is determined by the aforementioned equation based on PID control, on the basis of the target motor rotation angle $\theta$* thus determined. Furthermore, at S9, a correction coefficient k for decreasing the force generated by the assisting device 82 or for not generating a force, in steered amount control, is determined on the basis of the map data for the correction coefficient k with respect to the absolute value of the steering torque $T_S$ shown in FIG. 9. On the other hand, if the absolute value of the steering angle $\phi$ is equal to or greater than the set value $\phi_1$, then in S10, the steered torque component $T_D$ is taken to be 0.

The target output torque T* which ought to be generated by the motor 80 of the assisting device 82 is determined at S11 on the basis of the assisting torque component $T_A$, the steered torque component $T_D$ and the correction coefficient k determined as described above. Next, in step S12, the target supply current i* is determined on the basis of the determined target output torque T*. In S13, after a control signal based on the target supply current i* has been sent to the inverter 182, one execution of the program terminates. By controlling the operation of the motor 80 of the assisting device 82 and processing of this kind, the assisting device 82 is caused to generate the required force.

Next, a second embodiment will be described. The steering system for a vehicle according to the first embodiment is configured in such a manner that steered amount control is executed to control the force generated by the assisting device 82 such that a steered amount of the steered wheels corresponds to the steering angle $\phi$ of the steering wheel 10. On the other hand, the steering system according to the second embodiment is configured so as to execute control of the returning force of the assisting device 82 in such a manner that the force generated by the assisting device 82 creates a returning force which is a force having a magnitude corresponding to the steering angle $\phi$ that acts so as to return the steering wheel 10 to the neutral steering position. The steering system for the vehicle according to the second embodiment is configured by the same or similar elements to those of the first embodiment and therefore the same reference numerals are used and these elements are not described or are only described briefly here.

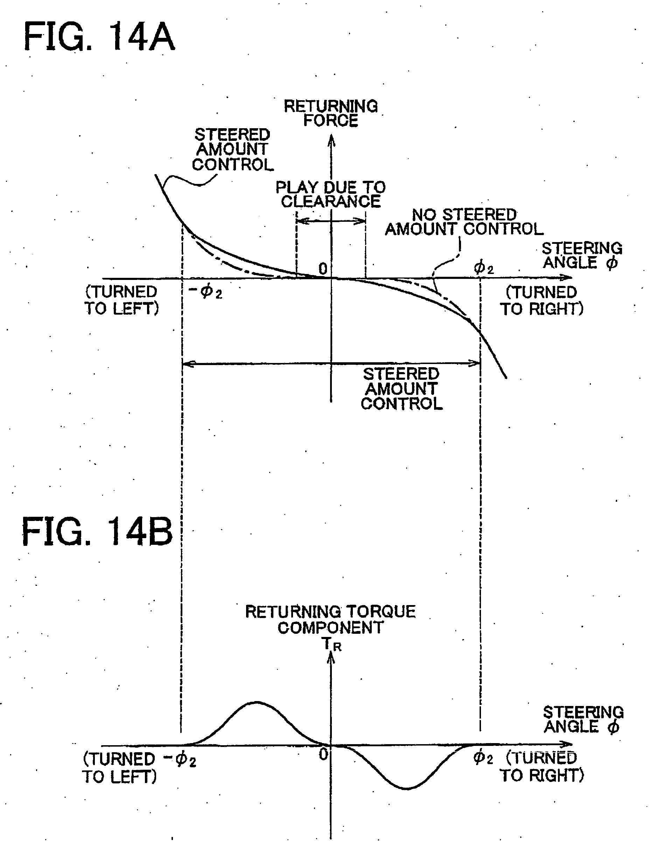

The returning force control performed as the steered amount control described above is executed when the absolute value of the steering angle $\phi$ detected by the steering angle sensor 184 is less than the set steering angle $\phi_2$. If the absolute value of the steering angle $\phi$ is less than the set value $\phi_2$, then a returning torque component $T_R$, which is a target returning force and forms one component of the force generated by the assisting device 82, is determined on the basis of this steering angle $\phi$. Map data for the returning torque component $T_R$ based on the steering angle $\phi$ as a parameter as shown in FIG. 14B is stored in the controller of the ECU 180. This map data is referenced when determining the returning torque component $T_R$.

The target output torque T* is determined in accordance with Equation (4) below, on the basis of the returning torque component $T_R$ which is determined as described above and the assisting torque component $T_A$ which is determined similarly to the system of the first embodiment.

$$T^* = T_A + T_R \cdots (4) \text{ (where } |\phi| < \phi_2).$$

The operation of the motor 80 is controlled by the inverter 182 in order to generate the target output torque T* determined in this way.

FIG. 14A shows the relationship between the steering angle $\phi$ of the steering wheel 10 and the returning force when the steering wheel 10 and the steered wheels are respectively positioned at the neutral steering position and the neutral steered position. This figure shows a case where the steering wheel 10 has been operated from the neutral steering position. The solid line in FIG. 14A shows the relationship in the steering system in which returning force control is executed. Furthermore, the single dotted line in FIG. 14A shows the relationship in a conventional steering system in which returning force control is not executed.

In a conventional system, since there is a clearance between the roller 122 and the pair of side wall faces 126 which form the groove 114, as shown in the single dotted line in FIG. 14A, then the input side shaft 88 does not rotate until the lower shaft 60 rotates and one of the pair of side wall faces 126 abuts against the roller 122. More specifically, there is a range in which a reactive force is not applied against the steering operation. On the other hand; in the system of this embodiment, the input side shaft 88 is rotated in the opposite direction to the rotation of the lower shaft 60 by the returning force control. Consequently, according to this steering system, it is possible to change rapidly from a state where there is a clearance between the roller 122 and the pair of side wall faces 126 to a state where these are mutually abutting. Therefore, it is possible to apply a reactive force against the steering operation, from an early time. In other words, the steering system is able to suppress deterioration in the operational feel experienced by the driver due to the absence of a reactive force against the steering operation.

In the system according to the embodiment, as shown in FIG. 14B, the absolute value of the returning torque component $T_R$ is set so as to increase gradually and then decrease gradually, as the absolute value of the steering angle $\phi$ becomes greater. Incidentally, the sign of the returning torque component $T_R$ (direction of returning torque) is opposite when the steered wheels are turned right and turned left. In other words, when turning right, the returning torque component $T_R$ gradually decreases and then gradually increases as the steering angle $\phi$ becomes greater. When turning left, the returning torque component $T_R$ gradually increases and then gradually decreases as the absolute value of the steering angle $\phi$ becomes greater and the steering angle $\phi$ becomes smaller. Therefore, if the absolute value of the steering angle $\phi$ becomes equal to or greater than the set value $\phi_2$ and the execution of returning force control is prohibited, it is possible to prevent sudden change in the force generated by the assisting device 82.

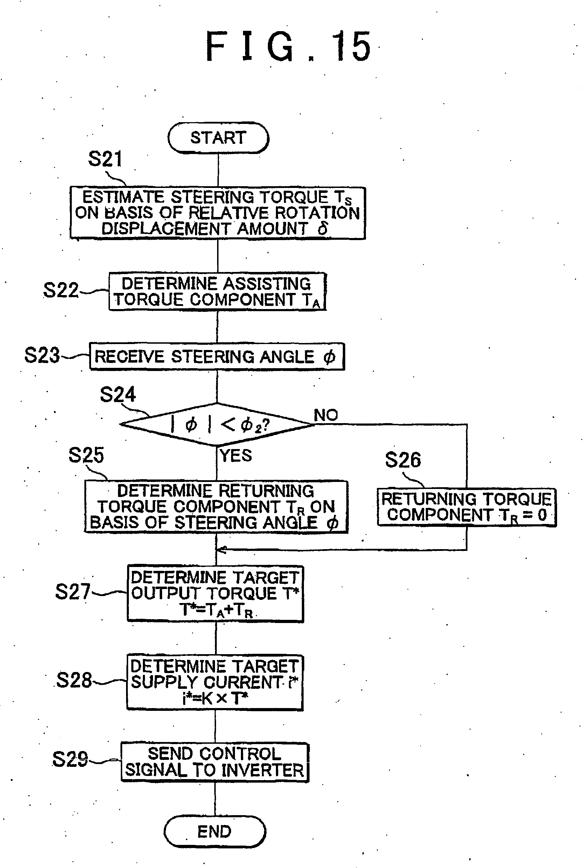

FIG. 15 is a flowchart of the control of the assisting device 82 in the steering system according to this embodiment. In the steering system according to the embodiment, this control program is executed repeatedly by the ECU 180, at short time intervals apart, while the ignition switch is in an ON state. This control program involves the same processing as the program in the system according to the first embodiment, and therefore description thereof is omitted or only brief description thereof is given here.

In the processing based on the control program according to the embodiment, firstly, the assisting torque component $T_A$ is determined in steps S21 and S22. Next, at S23, the steering angle $\phi$ of the steering wheel 10 detected by the steering angle sensor 184 is received. At S24, it is determined whether or not to execute returning force control as steered amount control, on the basis of the absolute value of this steering angle $\phi$. If the absolute value of the steering angle $\phi$ is less then the set value $\phi_2$, then at S25, the returning torque component $T_R$ corresponding to the steering angle $\phi$ is determined on the basis of the map data shown in FIG. 14B. On the other hand, if the absolute value of the steering angle $\phi$ is equal to or greater than the set value $\phi_2$, then in S26, the returning torque component $T_R$ is taken to be 0.

Next, at S27, the assisting torque component $T_A$ and the returning torque component $T_R$ determined as described above are added together to decide the target output torque T* that is to be generated by the motor 80 of the assisting device 82. Thereupon, in S28 onwards, the target supply current i* is determined on the basis of the target output torque T* thus determined, and a control based on this target supply current i* is sent to the inverter 182, whereupon one execution of the program is completed.

The invention relates to a steering system for a vehicle configured such that, in place of or in addition to assistance control for causing an assisting device to generate an assisting force corresponding to a steering force transmitted by a steering force transmission device, steered amount control can be executed for causing the assisting device to generate a force based on a steering amount of the steering operation member (10), when the steering amount is smaller than a predetermined steering amount, and a control method therefor. Since it is possible to generate the force for actively turning the steered wheels by this steered amount control, then when operating the steering operation member in the vicinity of the neutral steering position during driving of the vehicle, it is possible to suppress deterioration in the operational feel caused by the presence of a clearance between the protruding portion and the guide passage (114).

**Claims**

1. A steering system for a vehicle, including:

   (i) a steering operation member (10) that is operated by a driver;
   (ii) a turning device (14) that turns steered wheels in accordance with the an operation of the steering operation member (10);
   (iii) a steering force transmission device that has a first shaft, a second shaft, and a rotation transmission mechanism, and that transmits a steering force applied to the steering operation member (10), to the turning device (14), wherein the first shaft is provided rotatably and a first end portion of the first shaft is linked to one of the steering operation member (10) and the turning device (14),

the second shaft is provided rotatably in a state where a rotation axis of the first shaft and a rotation axis of the second shaft are parallel and shifted from each other by a predetermined distance, and a first end portion of the second shaft is linked to the other of the steering operation member (10) and the turning device (14), and the rotation transmission mechanism includes a protruding portion and a guide passage (114) and is configured such that, due to a rotation of the one of the first shaft and the second shaft, the other of these shafts is caused to be rotated while changing a rotational phase difference that is a difference between respective rotational phases of the first shaft and the second shaft, wherein

the protruding portion is provided, on a second end portion of the first shaft, at a position distanced by a predetermined distance in a radial direction of the first shaft from the rotation axis of the first shaft, and

the guide passage (114) is provided, on a second end portion of the second shaft, so as to extend in parallel with a radial direction of the second shaft, engages the protruding portion with a clearance therebetween in a circumferential direction of the second shaft, and allows the protruding portion to move in a radial direction of the second shaft;

(iv) an assisting device (82) that is provided on a side closer to the steered wheels than the rotation transmission mechanism of the steering force transmission device, and has a drive source (80), wherein the assisting device (82) generates an assisting force for assisting the turning of the steered wheels in accordance with a force generated by the drive source (80); and

(v) a control device (180) that controls the assisting device (82),

the steering system for the vehicle being **characterized in that**

the control device (180) executes an assistance control for controlling the assisting device (82) such that the assisting device (82) generates a force ($T_A$) corresponding to the steering force transmitted by the steering force transmission device, and, when the steering amount is smaller than a predetermined steering amount, either in place of the assistance control or in addition to the assistance control, a steered amount control for controlling the assisting device (82) such that the assisting device (82) generates a force ($T_D$, $T_R$) based on a steering amount of the steering operation member (10).

2. The steering system for the vehicle according to claim 1, wherein
when executing the steered amount control, the control device (180) determines a target steered amount for the steered wheels on the basis of the steering amount of the steering operation member (10), determines a force to be generated by the assisting device (82) such that a steered amount of the steered wheels becomes the target steered amount, and controls the assisting device (82) so as to generate a determined force.

3. The steering system for the vehicle according to claim 2, wherein
the assisting device (82) is configured such that an amount of an operation of the drive source (80) becomes an amount corresponding to the steered amount; and
when executing the steered amount control, the control device (180) estimates an actual steered amount on the basis of the amount of the operation of the drive source (80) of the assisting device (82), determines the force to be generated by the assisting device (82) on the basis of the estimated actual steered amount and the target steered amount, and controls the assisting device (82) so as to generate the determined force.

4. The steering system for the vehicle according to claim 1, wherein
when executing the steered amount control, the control device (180) determines the force to be generated by the assisting device (82) on the basis of the steering amount of the steering operation member, so as to obtain a returning force that corresponds to the steering amount of the steering operation member (10) and that returns the steering operation member to a neutral steering position thereof, and controls the assisting device (82) so as to generate a determined force.

5. The steering system for the vehicle according to any one of claims 1 to 4, wherein
the control device (180) prohibits an execution of the steered amount control, when the steering force transmitted by the steering force transmission device to the turning device (14) exceeds a predetermined value.

6. The steering system for the vehicle according to claim 5, wherein
the control device (180) determines the force generated by the assisting device (82) so as to gradually decrease the force as the steering force approaches the predetermined value, and controls the assisting device (82) so as to generate the determined force.

**7.** The steering system for the vehicle according to any one of claims 1 to 6, wherein

the second shaft includes a pair of side wall faces (126), the pair of side wall faces (126) extending in parallel so as to allow the protruding portion to move and being provided so as to face each other, and the width between the pair of side wall faces (126) being larger than the (126) dimension of the protruding portion in a circumferential direction of the first shaft;

the rotation transmission mechanism is configured such that the pair of side wall faces (126) delimit the guide passag (114) and sandwich the protruding portion; and

the predetermined steering amount is set to be a steering amount greater than the steering amount of the steering operation member (10) when the protruding portion abuts against one of the pair of side wall faces (126) and the turning device is in a neutral steered position.

**8.** A control method for a steering system for a vehicle including: (i) a steering operation member (10) that is operated by a driver; (ii) a turning device (14) that turns steered wheels in accordance with an operation of the steering operation member (10); and (iii) a steering force transmission device that has a first shaft, a second shaft, and a rotation transmission mechanism, and that transmits a steering force applied to the steering operation member (10), to the turning device (14), wherein the first shaft is provided rotatably and a first end portion of the first shaft is linked to one of the steering operation member (10) and the turning device (14), wherein the second shaft is provided rotatably in a state where a rotation axis of the first shaft and a rotation axis of the second shaft are parallel and shifted from each other by a predetermined distance, and a first end portion of the second shaft is linked to the other of the steering operation member (10) and the turning device (14), and the rotation transmission mechanism includes a protruding portion and a guide passage (114) and is configured such that, due to a rotation of the one of the first shaft and the second shaft, the other of these shafts is caused to be rotated while changing a rotational phase difference that is a difference between respective rotational phases of the first shaft and the second shaft, wherein the protruding portion is provided, on a second end portion of the first shaft, at a position distanced by a predetermined distance in a radial direction of the first shaft from the rotation axis of the first shaft, and the guide passage (114) is provided, on a second end portion of the second shaft, so as to extend in parallel with a radial direction of the second shaft, engages the protruding portion with a clearance therebetween in a circumferential direction of the second shaft, and allows the protruding portion to move in a radial direction of the second shaft; and (iv) an assisting device (82) that is provided on a side closer to the steered wheels than the rotation transmission mechanism of the steering force transmission device and has a drive source (80), wherein the assisting device (82) generates an assisting force for assisting the turning of the steered wheels in accordance with a force generated by the drive source (80);

the control method being **characterized by** comprising the steps of:

executing an assistance control for controlling the assistance device (82) such that the assistance device (82) generates a force ($T_A$) corresponding to the steering force transmitted by the steering force transmission device; and when the steering amount is smaller than a predetermined steering amount.

either in place of the assistance control or in addition to the assistance control, executing a steered amount control for controlling the assisting device (82) such that the assisting device (82) generates a force ($T_D$, $T_R$) based on a steering amount of the steering operation member (10).

**Patentansprüche**

**1.** Lenksystem für ein Fahrzeug, mit :

(i) einem Lenkbedienelement (10), das von einem Fahrer bedient wird;

(ii) einer Drehvorrichtung (14), die gelenkte Räder in Übereinstimmung mit einer Bedienung des Lenkbedienelements (10) dreht;

(iii) einer Lenkkraftübertragungsvorrichtung, die eine erste Welle, eine zweite Welle und einen Drehübertragungsmechanismus hat sowie eine auf das Lenkbedienelement (10) aufgebrachte Lenkkraft zu der Drehvorrichtung (14) überträgt, wobei

die erste Welle drehbar vorgesehen ist und ein erster Endabschnitt der ersten Welle mit einem von dem Lenkbedienelement (10) und der Drehvorrichtung (14) verbunden ist,

die zweite Welle drehbar vorgesehen ist, in einem Zustand, in dem eine Drehachse der ersten Welle und eine Drehachse der zweiten Welle parallel zueinander und um einen vorbestimmten Abstand voneinander versetzt sind, und ein erster Endabschnitt der zweiten Welle mit dem anderen von dem Lenkbedienelement (10) und der Drehvorrichtung (14) verbunden ist, und

der Drehübertragungsmechanismus einen vorstehenden Abschnitt und einen Führungsdurchgang (114) hat und so aufgebaut ist, dass, aufgrund einer Drehung der einen von der ersten Welle und der zweiten Welle, die andere dieser Wellen dazu gebracht wird, gedreht zu werden, während eine Drehphasendifferenz verändert wird, die eine Differenz zwischen der jeweiligen Drehphase der ersten Welle und der zweiten Welle ist, wobei

der vorstehende Abschnitt an einem zweiten Endabschnitt der ersten Welle an einer Position vorgesehen ist, die um einen vorbestimmten Abstand in einer radialen Richtung der ersten Welle von der Drehachse der ersten Welle beabstandet ist, und

der Führungsdurchgang (114) an einem zweiten Endabschnitt der zweiten Welle vorgesehen ist, sodass er sich parallel zu einer radialen Richtung der zweiten Welle erstreckt, in den vorstehenden Abschnitt mit einem Abstand dazwischen in einer Umfangsrichtung der zweiten Welle eingreift und dem vorstehenden Abschnitt erlaubt, sich in eine radiale Richtung der zweiten Welle zu bewegen;

(iv) einer Assistenzvorrichtung (82), die an einer Seite vorgesehen ist, die näher an den gelenkten Rädern ist als an dem Drehübertragungsmechanismus der Lenkkraftübertragungseinrichtung, und eine Antriebsquelle (80) hat, wobei die Assistenzvorrichtung (82) eine Assistenzkraft erzeugt, um der Drehung der gelenkten Räder in Übereinstimmung mit einer von der Antriebsquelle (80) erzeugten Kraft zu assistieren; und

(v) einer Steuerungsvorrichtung (180), die die Assistenzvorrichtung (82) steuert, wobei das Lenksystem für das Fahrzeug **dadurch gekennzeichnet ist, dass**

die Steuerungsvorrichtung (180) eine Assistenzsteuerung ausführt, um die Assistenzvorrichtung (82) zu steuern, sodass die Assistenzvorrichtung (82) eine Kraft ($T_A$) erzeugt, die der von der Lenkkraftübertragungseinrichtung übertragenen Lenkkraft entspricht, und, wenn der Lenkbetrag kleiner ist als ein vorbestimmter Lenkbetrag, anstelle der Assistenzsteuerung oder zusätzlich zu der Assistenzsteuerung eine Lenkbetragsteuerung ausführt, um die Assistenzvorrichtung (82) zu steuern, sodass die Assistenzvorrichtung (82) eine Kraft ($T_D$, $T_R$) auf der Grundlage eines Lenkbetrags des Lenkbedienelements (10) erzeugt.

2. Lenksystem für ein Fahrzeug nach Anspruch 1, wobei

wenn die Lenkbetragssteuerung ausgeführt wird, die Steuerungsvorrichtung (180) einen Soll-Lenkbetrag für die gelenkten Räder auf der Grundlage des Lenkbetrags des Lenkbedienelements (10) bestimmt, eine Kraft bestimmt, die von der Assistenzvorrichtung (82) erzeugt werden soll, sodass ein gelenkter Betrag der gelenkten Räder zum Soll-Lenkbetrag wird, und die Assistenzvorrichtung (82) steuert, sodass sie eine bestimmte Kraft erzeugt.

3. Lenksystem für ein Fahrzeug nach Anspruch 2, wobei

die Assistenzvorrichtung (82) so aufgebaut ist, dass ein Betrag einer Bedienung der Antriebsquelle (80) ein Betrag wird, der dem Lenkbetrag entspricht; und wenn die Lenkbetragssteuerung ausgeführt wird, die Steuerungseinrichtung (180) einen Ist-Lenkbetrag auf der Grundlage des Betrags der Bedienung der Antriebsquelle (80) der Assistenzvorrichtung (82) abschätzt, die Kraft bestimmt, die von der Assistenzvorrichtung (82) auf der Grundlage des abgeschätzten Ist-Lenkbetrags und des Soll-Lenkbetrags erzeugt werden soll, und die Assistenzvorrichtung (82) steuert, sodass sie die bestimmte Kraft erzeugt.

4. Lenksystem für ein Fahrzeug nach Anspruch 1, wobei

wenn die Lenkbetragssteuerung ausgeführt wird, die Steuerungsvorrichtung (180) die Kraft bestimmt, die von der Assistenzvorrichtung (82) auf der Grundlage des Lenkbetrags des Lenkbedienelements erzeugt werden soll, um so eine rückführende Kraft zu erhalten, die dem Lenkbetrag des Lenkbedienelements (10) entspricht und die das Lenkbedienelement zu einer neutralen Lenkposition davon zurückführt, und die Assistenzvorrichtung (82) steuert, sodass sie die bestimmte Kraft erzeugt.

5. Lenksystem für ein Fahrzeug nach einem der Ansprüche 1 bis 4, wobei

die Steuerungsvorrichtung (180) ein Ausführen der Lenkbetragssteuerung verhindert, wenn die von der Lenkkraftübertragungseinrichtung zu der Drehvorrichtung (14) übertragene Lenkkraft einen vorbestimmten Wert überschreitet.

6. Lenksystem für ein Fahrzeug nach Anspruch 5, wobei die Steuerungsvorrichtung (180) die von der Assistenzvorrichtung (82) erzeugte Kraft bestimmt, um so allmählich die Kraft zu verringern, während sich die Lenkkraft dem vorbestimmten Wert nähert, und die Assistenzvorrichtung (82) steuert, sodass sie die bestimmte Kraft erzeugt.

7. Lenksystem für ein Fahrzeug nach einem der Ansprüche 1 bis 6, wobei

die zweite Welle zwei Seitenwandflächen (126) hat, wobei die zwei Seitenwandflächen (126) sich parallel erstrecken, sodass sie dem vorstehenden Abschnitt erlauben, sich zu bewegen, und vorgesehen sind, sich einander gegenüber zu liegen, und die Breite zwischen den zwei Seitenwandflächen (126) größer ist als die Abmessung des vorstehenden Abschnitts in einer Umfangsrichtung der ersten Welle;

der Drehübertragungsmechanismus so aufgebaut ist, dass die zwei Seitenwandflächen (126) den Führungsdurchgang (114) begrenzen und den vorstehenden Abschnitt einkeilen; und

der vorbestimmte Lenkbetrag festgesetzt ist, ein Lenkbetrag zu sein, der größer ist als der Lenkbetrag des Lenkbedienelements (10), wenn der vorstehende Abschnitt gegen eine der zwei Seitenwandflächen (126) stößt und die Drehvorrichtung in einer neutralen Lenkposition ist.

8. Steuerungsverfahren für ein Lenksystem für ein Fahrzeug mit: (i) einem Lenkbedienelement (10), das von einem Fahrer bedient wird; (ii) einer Drehvorrichtung (14), die gelenkte Räder in Übereinstimmung mit einer Bedienung des Lenkbedienelements (10) dreht; und (iii) einer Lenkkraftübertragungsvorrichtung, die eine erste Welle, eine zweite Welle und einen Drehübertragungsmechanismus hat sowie eine auf das Lenkbedienelement (10) aufgebrachte Lenkkraft zu der Drehvorrichtung (14) überträgt, wobei die erste Welle drehbar vorgesehen ist und ein erster Endabschnitt der ersten Welle mit einem von dem Lenkbedienelement (10) und der Drehvorrichtung (14) verbunden ist, wobei die zweite Welle drehbar vorgesehen ist, in einem Zustand, in dem eine Drehachse der ersten Welle und eine Drehachse der zweiten Welle parallel zueinander und um einen vorbestimmten Abstand voneinander versetzt sind, und ein erster Endabschnitt der zweiten Welle mit dem anderen von dem Lenkbedienelement (10) und der Drehvorrichtung (14) verbunden ist, und der Drehübertragungsmechanismus einen vorstehenden Abschnitt und einen Führungsdurchgang (114) hat und so aufgebaut ist, dass, aufgrund einer Drehung der einen von der ersten Welle und der zweiten Welle, die andere dieser Wellen dazu gebracht wird, gedreht zu werden, während eine Drehphasendifferenz verändert wird, die eine Differenz zwischen der jeweiligen Drehphase der ersten Welle und der zweiten Welle ist, wobei der vorstehende Abschnitt an einem zweiten Endabschnitt der ersten Welle an einer Position vorgesehen ist, die um einen vorbestimmten Abstand in einer radialen Richtung der ersten Welle von der Drehachse der ersten Welle beabstandet ist, und der Führungsdurchgang (114) an einem zweiten Endabschnitt der zweiten Welle vorgesehen ist, sodass er sich parallel zu einer radialen Richtung der zweiten Welle erstreckt, in den vorstehenden Abschnitt mit einem Abstand dazwischen in einer Umfangsrichtung der zweiten Welle eingreift und dem vorstehenden Abschnitt erlaubt, sich in eine radiale Richtung der zweiten Welle zu bewegen; und (iv) einer Assistenzvorrichtung (82), die an einer Seite vorgesehen ist, die näher an den gelenkten Rädern ist als an den Drehübertragungsmechanismus der Lenkkraftübertragungseinrichtung, und eine Antriebsquelle (80) hat, wobei die Assistenzvorrichtung (82) eine Assistenzkraft erzeugt, um der Drehung der gelenkten Räder in Übereinstimmung mit einer von der Antriebsquelle (80) erzeugten Kraft zu assistieren;

wobei das Steuerungsverfahren durch folgende Schritte gekennzeichnet ist:

Ausführen einer Assistenzsteuerung zum Steuern der Assistenzvorrichtung (82), sodass die Assistenzvorrichtung (82) eine Kraft ($T_A$) erzeugt, die der von der Lenkkraftübertragungseinrichtung übertragenen Lenkkraft entspricht; und

wenn der Lenkbetrag kleiner ist als ein vorbestimmter Lenkbetrag, entweder anstelle der Assistenzsteuerung oder zusätzlich zu der Assistenzsteuerung, Ausführen einer Lenkbetragssteuerung zum Steuern der Assistenzvorrichtung (82), sodass die Assistenzvorrichtung (82) eine Kraft ($T_D$, $T_R$) auf der Grundlage eines Lenkbetrags des Lenkbedienelements (10) erzeugt.

**Revendications**

1. Système de direction pour un véhicule comprenant :

(i) un élément d'actionnement de direction (10) qui est actionné par un conducteur ;
(ii) un dispositif de pivotement (14) qui fait tourner les roues dirigées selon le fonctionnement de l'élément d'actionnement de direction (10) ;
(iii) un dispositif de transmission de force de direction qui a un premier arbre, un second arbre, et un mécanisme de transmission de rotation et qui transmet une force de direction appliquée à l'élément d'actionnement de direction (10), au dispositif de pivotement (14), dans lequel :

le premier arbre est prévu en rotation et une première partie d'extrémité du premier arbre est reliée à l'un parmi l'élément d'actionnement de direction (10) et le dispositif de pivotement (14),
le second arbre est prévu en rotation dans un état dans lequel un axe de rotation du premier arbre et un axe de rotation du second arbre sont parallèles et décalés l'un par rapport à l'autre par une distance prédéterminée, et une première partie d'extrémité du second arbre est reliée à l'autre parmi l'élément d'actionnement de direction (10) et le dispositif de pivotement (14), et le mécanisme de transmission de rotation comprend une partie en saillie et un passage de guidage (114) et est configuré de sorte que, en raison de la rotation de l'un parmi le premier arbre et le second arbre, l'autre de ces arbres est amené à être entraîné en rotation tout en changeant une différence de phase de rotation qui est une différence entre les phases de rotation respectives du premier arbre et du second arbre, dans lequel :

la partie en saillie est prévue, sur une seconde partie d'extrémité du premier arbre, dans une position écartée par une distance prédéterminée, dans une direction radiale du premier arbre, de l'axe de rotation du premier arbre, et le passage de guidage (114) est prévu, sur une seconde partie d'extrémité du second arbre, afin de s'étendre parallèlement à une direction radiale du second arbre, met en prise la partie en saillie avec un jeu entre eux dans une direction circonférentielle du second arbre, et permet à la partie en saillie de se déplacer dans une direction radiale du second arbre ;

(iv) un dispositif d'assistance (82) qui est prévu sur un côté plus proche des roues dirigées que du mécanisme de transmission de rotation du dispositif de transmission de force de direction, et a une source d'entraînement (80), dans lequel le dispositif d'assistance (82) génère une force d'assistance pour assister le pivotement des roues dirigées selon une force générée par la source d'entraînement (80) ; et
(v) un dispositif de commande (180) qui commande le dispositif d'assistance (82),
le système de direction pour le véhicule étant **caractérisé en ce que** :

le dispositif de commande (180) exécute une commande d'assistance pour commander le dispositif d'assistance (82) de sorte que le dispositif d'assistance (82) génère une force ($T_A$) correspondant à la force de direction transmise par le dispositif de transmission de force de direction, et lorsque la quantité de direction est inférieure à une quantité de direction prédéterminée, soit à la place de la commande d'assistance, soit en plus de la commande d'assistance, une commande de quantité dirigée pour commander le dispositif d'assistance (82) de sorte que le dispositif d'assistance (82) génère une force ($T_D$, $T_R$) en fonction de la quantité de direction de l'élément d'actionnement de direction (10).

2. Système de direction pour un véhicule selon la revendication 1, dans lequel :

lors de l'exécution de la commande de quantité dirigée, le dispositif de commande (180) détermine une quantité dirigée cible pour les roues dirigées en fonction de la quantité de direction de l'élément d'actionnement de direction (10), détermine une force à générer par le dispositif d'assistance (82) de sorte qu'une quantité dirigée des roues dirigées devient la quantité dirigée cible, et commande le dispositif d'assistance (82) afin de générer une force déterminée.

3. Système de direction pour un véhicule selon la revendication 2, dans lequel :

le dispositif d'assistance (82) est configuré de sorte qu'une quantité d'un fonctionnement de la source d'entraînement (80) devient une quantité correspondant à la quantité dirigée ; et
lors de l'exécution de la commande de quantité dirigée, le dispositif de commande (180) estime une quantité dirigée réelle en fonction de la quantité du fonctionnement de la source d'entraînement (80) du dispositif d'assistance (82), détermine la force à générer par le dispositif d'assistance (82) en fonction de la quantité dirigée réelle estimée et de la quantité dirigée cible, et commande le dispositif d'assistance (82) afin de générer la force déterminée.

4. Système de direction pour un véhicule selon la revendication 1, dans lequel :

lors de l'exécution de la commande de quantité dirigée, le dispositif de commande (180) détermine la force à générer par le dispositif d'assistance (82) en fonction de la quantité de direction de l'élément d'actionnement de direction, afin d'obtenir une force de retour qui correspond à la quantité de direction de l'élément d'actionnement de direction (10) et qui ramène l'élément d'actionnement de direction dans sa position de direction neutre, et commande le dispositif d'assistance (82) afin de générer une force déterminée.

5. Système de direction pour un véhicule selon l'une quelconque des revendications 1 à 4, dans lequel :

le dispositif de commande (180) empêche une exécution de la commande de quantité dirigée, lorsque la force de direction transmise par le dispositif de transmission de force de direction au dispositif de pivotement (14) dépasse une valeur prédéterminée.

6. Système de direction pour un véhicule selon la revendication 5, dans lequel :

le dispositif de commande (180) détermine la force générée par le dispositif d'assistance (82) afin de diminuer progressivement la force au fur et à mesure que la force de direction s'approche de la valeur prédéterminée, et commande le dispositif d'assistance (82) afin de générer la force déterminée.

**7.** Système de direction pour un véhicule selon l'une quelconque des revendications 1 à 6, dans lequel :

le second arbre comprend une paire de faces de paroi latérale (126), la paire de faces de paroi latérale (126) s'étendant parallèlement afin de permettre le déplacement de la partie en saillie et étant prévues afin de se faire face, et la largeur entre la paire de faces de paroi latérale (126) étant supérieure à la dimension de la partie en saillie dans une direction circonférentielle du premier arbre ;

le mécanisme de transmission de rotation est configuré de sorte que la paire de faces de paroi latérale (126) délimitent le passage de guidage (114) et prennent en sandwich la partie en saillie ; et

la quantité de direction prédéterminée est déterminée pour être une quantité de direction supérieure à la quantité de direction de l'élément d'actionnement de direction (10) lorsque la partie en saillie vient en butée contre l'une de la paire des faces de paroi latérale (126) et que le dispositif de pivotement est dans une position dirigée neutre.

**8.** Procédé de commande pour un système de direction pour un véhicule comprenant : (i) un élément d'actionnement de direction (10) qui est actionné par un conducteur ; (ii) un dispositif de pivotement (14) qui pivote les roues dirigées selon une opération de l'élément d'actionnement de direction (10) ; et (iii) un dispositif de transmission de force de direction qui a un premier arbre, un second arbre et un mécanisme de transmission de rotation et qui transmet une force de direction appliquée à l'élément d'actionnement de direction (10), au dispositif de pivotement (14), dans lequel le premier arbre est prévu en rotation et une première partie d'extrémité du premier arbre est reliée à l'un parmi l'élément d'actionnement de direction (10) et le dispositif de pivotement (14), dans lequel le second arbre est prévu en rotation dans un état dans lequel un axe de rotation du premier arbre et un axe de rotation du second arbre sont parallèles et décalés l'un par rapport à l'autre par une distance prédéterminée, et une première partie d'extrémité du second arbre est reliée à l'autre parmi l'élément d'actionnement de direction (10) et le dispositif de pivotement (14), et le mécanisme de transmission de rotation comprend une partie en saillie et un passage de guidage (114) et est configuré de sorte que, pendant une rotation de l'un parmi le premier arbre et le second arbre, l'autre parmi ces arbres est amené à être entraîné en rotation tout en changeant une différence de phase de rotation qui est une différence entre les phases de rotation respectives du premier arbre et du second arbre, dans lequel la partie en saillie est prévue, sur une seconde partie d'extrémité du premier arbre, dans une position espacée par une distance prédéterminée dans une direction radiale du premier arbre à partir de l'axe de rotation du premier arbre, et le passage de guidage (114) est prévu, sur une seconde partie d'extrémité du second arbre, pour s'étendre parallèlement à une direction radiale du second arbre, met en prise la partie en saillie avec un jeu entre eux dans une direction circonférentielle du second arbre, et permet à la partie en saillie de se déplacer dans une direction radiale du second arbre ; et (iv) un dispositif d'assistance (82) qui est prévu sur un côté plus proche des roues dirigées que du mécanisme de transmission de rotation du dispositif de transmission de force de direction et a une source d'entraînement (80), dans lequel le dispositif d'assistance (82) génère une force d'assistance pour assister le pivotement des roues dirigées selon une force générée par la source d'entraînement (80),

le procédé de commande étant **caractérisé en ce qu'**il comprend les étapes consistant à :

exécuter une commande d'assistance pour commander le dispositif d'assistance (82) de sorte que le dispositif d'assistance (82) génère une force ($T_A$) correspondant à la force de direction transmise par le dispositif de transmission de force de direction ; et

lorsque la quantité de direction est inférieure à une quantité de direction prédéterminée, soit, à la place de la commande d'assistance ou en plus de la commande d'assistance, exécuter une commande de quantité dirigée pour commander le dispositif d'assistance (82) de sorte que le dispositif d'assistance (82) génère une force ($T_D$, $T_R$) en fonction d'une quantité de direction de l'élément d'actionnement de direction ( 10).

# FIG.1

EP 2 199 183 B1

# FIG.2

EP 2 199 183 B1

# FIG.3

EP 2 199 183 B1

# FIG.4

# FIG.5

# FIG.6A

64

124122 $\alpha = \beta = 0°$

# FIG.6B

$\beta < 90°$

$\alpha = 90°$

# FIG.6C

$\beta < 90°$

$\alpha = 90°$

# FIG.6D

$\alpha = \beta = 180°$

# FIG.7

# FIG.8

# FIG.9

# FIG.10

TARGET MOTOR
ROTATION ANGLE
$\theta^*$

(TURNED
TO
RIGHT)

$-\phi_1$          0

(TURNED
TO LEFT)

$\phi_1$    STEERING ANGLE $\Phi$

# FIG.11

ROTATION ANGLE $\beta$
OF INPUT SIDE SHAFT

(TURNED
TO RIGHT)

STEERED
AMOUNT
CONTROL

NO STEERED
AMOUNT
CONTROL

PLAY DUE TO
CLEARANCE

ROTATION
ANGLE $\alpha$ OF
LOWER SHAFT
(TURNED
TO RIGHT)

(TURNED
TO LEFT)

0

ASSISTANCE
CONTROL

ASSISTANCE
CONTROL

STEERED
AMOUNT
CONTROL

(TURNED
TO LEFT)

# F I G . 12

CORRECTION
COEFFICIENT
k

1.0

0

$T_{S0}$

STEERING
TORQUE
$|T_S|$

# FIG.13

START

S1 — ESTIMATE STEERING TORQUE $T_s$ ON BASIS OF RELATIVE ROTATION DISPLACEMENT AMOUNT $\delta$

S2 — DETERMINE ASSISTING TORQUE COMPONENT $T_A$

S3 — RECEIVE STEERING ANGLE $\phi$

S4 — $|\phi| < \phi_1?$ — NO

YES

S5 — DETERMINE TARGET MOTOR ROTATION ANGLE $\theta^*$ ON BASIS OF STEERING ANGLE $\phi$

S6 — RECEIVE ACTUAL MOTOR ROTATION ANGLE $\theta$

S7 — CALCULATE MOTOR ROTATION ANGLE DIFFERENCE $\Delta\theta$

S8 — DETERMINE STEERED TORQUE COMPONENT $T_D$ BASED ON PID CONTROL

S10 — STEERED TORQUE COMPONENT $T_D = 0$

S9 — DETERMINE CORRECTION COEFFICIENT k ON BASIS OF STEERING TORQUE $T_s$

S11 — DETERMINE TARGET OUTPUT TORQUE $T^*$
$T^* = T_A + k \times T_D$

S12 — DETERMINE TARGET SUPPLY CURRENT $i^*$
$i^* = K \times T^*$

S13 — SEND CONTROL SIGNAL TO INVERTER

END

## FIG. 14A

RETURNING FORCE

STEERED AMOUNT CONTROL

PLAY DUE TO CLEARANCE

NO STEERED AMOUNT CONTROL

STEERING ANGLE φ

0

−φ₂

φ₂

(TURNED TO LEFT)

(TURNED TO RIGHT)

STEERED AMOUNT CONTROL

## FIG. 14B

RETURNING TORQUE COMPONENT T_R

STEERING ANGLE φ

0

−φ₂

φ₂

(TURNED TO LEFT)

(TURNED TO RIGHT)

# FIG.15

START

S21

ESTIMATE STEERING TORQUE $T_S$ ON BASIS OF RELATIVE ROTATION DISPLACEMENT AMOUNT $\delta$

S22 — DETERMINE ASSISTING TORQUE COMPONENT $T_A$

S23 — RECEIVE STEERING ANGLE $\phi$

S24 — $|\phi| < \phi_2$? — NO

YES

S25 — DETERMINE RETURNING TORQUE COMPONENT $T_R$ ON BASIS OF STEERING ANGLE $\phi$

S26 — RETURNING TORQUE COMPONENT $T_R = 0$

S27 — DETERMINE TARGET OUTPUT TORQUE $T^*$ $T^* = T_A + T_R$

S28 — DETERMINE TARGET SUPPLY CURRENT $i^*$ $i^* = K \times T^*$

S29 — SEND CONTROL SIGNAL TO INVERTER

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3227772 A
- JP 8175406 A
- JP 2000159134 A
- US 20010027895 A